(19) Europäisches Patentamt
European Patent Office
Office européen des brevets

(11) **EP 2 226 981 B1**

(12) **EUROPEAN PATENT SPECIFICATION**

(45) Date of publication and mention
of the grant of the patent:
**15.07.2015 Bulletin 2015/29**

(51) Int Cl.:
***H04L 27/26*** *(2006.01)*

(21) Application number: **10250344.8**

(22) Date of filing: **26.02.2010**

(54) **Transmitter, receiver, power amplification method, and signal demodulation method**

Sender, Empfänger, Leistungsverstärkungsverfahren und Signaldemodulationsverfahren

Émetteur, récepteur, procédé d'amplification de la puissance et procédé de démodulation de signal

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.03.2009 JP 2009048093**

(43) Date of publication of application:
**08.09.2010 Bulletin 2010/36**

(73) Proprietor: **NTT DOCOMO, INC.**
**Chiyoda-ku**
**Tokyo 100-6150 (JP)**

(72) Inventors:
• **Fujii, Hiromasa**
**Tokyo 100-6150 (JP)**
• **Asai, Takahiro**
**Tokyo 100-6150 (JP)**
• **Okumura, Yukihiko**
**Tokyo 100-6150 (JP)**
• **Tomisato, Shigeru**
**Tokyo 100-6150 (JP)**

• **Hata, Masaharu**
**Tokyo 100-6150 (JP)**

(74) Representative: **Maury, Richard Philip**
**Marks & Clerk LLP**
**90 Long Acre**
**London WC2E 9RA (GB)**

(56) References cited:
**WO-A2-2004/073182    US-A1- 2002 101 936**
**US-A1- 2005 201 180**

• **FARNESE D ET AL: "Pulse superposition: a technique for peak-to-average power ratio reduction in OFDM modulation" PROCEEDINGS OF IEEE INTERNATIONAL CONFERENCE ON COMMUNICATIONS - 28 APRIL-2 MAY 2002 - NEW YORK, NY, USA, IEEE, PISCATAWAY, NJ, USA LNKD- DOI:10.1109/ICC.2002.997135, vol. 3, 28 April 2002 (2002-04-28), pages 1682-1685, XP010589773 ISBN: 978-0-7803-7400-3**

## Description

<u>BACKGROUND OF THE INVENTION</u>

1. Field of the Invention

The present invention relates to a transmitter, a receiver, a power amplification method, and a signal demodulation method.

2. Description of the Related Art

According to an OFDMA (Orthogonal Frequency Division Multiple Access) scheme, plural users share the system band. The system band is divided into plural sub-carriers, which are assigned to plural users. The number of users within the system band and the bandwidth used by a user vary from time to time. As a result, the usage rate of the system band varies accordingly.

An OFDM signal, which is a transmission signal for each user according to the OFDMA scheme, is a sum of signals in the respective sub-carriers. Thus, the OFDM signal has very high peak power compared to average power, depending on signal phases in the respective sub-carriers. For example, when all the signals in the sub-carriers are added in phase, the OFDM signal has peak power which is $N_c$ times higher than average power ($N_c$ is the number of sub-carriers). In this manner, the generated transmission signal (OFDM signal) according to the OFDMA scheme has very high peak power compared to average power. A technology of reducing such peak power has been proposed in Japanese Patent Laid-Open Publication No. 2008-060846, for example.

[Description of the Invention]

[Problem(s) to be solved by the Invention]

In a transmission power amplifier used in a transmitter according to the OFDMA scheme, it is desirable that the transmission power amplifier be used in a region in which average power is close to saturated power, which is an upper limit of power after amplification. However, assuming that peak power is higher than average power, as is the case with the transmission signal according to the OFDMA scheme, signal components above saturated power of the transmission power amplifier may be generated, when the input signal is amplified by the transmission power amplifier. In this case, amplitude components of the input signal above a predetermined value are cut (hereinafter referred to as "clip").

When the clip occurs, the signal is distorted and distortion power (clip noise) spreads beyond the signal band. For example, when plural users use the same system band and other users use adjacent bands, the distortion power spreading beyond the signal band may interfere with signals of the other users using the adjacent bands.

US 2005/201180 A1 (NAGUIB AYMAN F [US] ET AL) 15 September 2005 (2005-09 15) discloses a transmitter comprising: a nonlinear input-output conversion characteristic control unit, configured to determine a nonlinear input-output conversion characteristic for converting a signal depending on a usage status of a frequency band; an amplitude control unit configured to convert an amplitude of the signal based on the determined nonlinear input-output conversion characteristic; and a transmission power amplification unit configured to amplify power of the signal with the converted amplitude.

US2002/101936 A1 (WRIGHT ANDREW S [CA] ET AL) 1 August 2002 (2002-08-01) further discloses a preconditioning stage of a waveshaping circuit, applying a soft non-linear compression function.

WO 2004/073182 A2 (NEW JERSEY TECH INST [US] 26 August 2004 (2004-08-26) discloses a receiver comprising: a nonlinear input-output conversion characteristic unit configured to estimate a nonlinear input-output conversion characteristic or converting a signal, the nonlinear input-output conversion characteristic being determined by a transmitter a received signal demodulating unit configured to demodulate a received signal; a modulated signal generating unit configured to modulate the demodulated signal; a transmission distortion power generating unit configured to convert an amplitude of the modulated signal based on the received nonlinear input-output conversion characteristic to generate distortion power; a subtracting unit configured to subtract the generated distortion power from the received signal; a received signal re-demodulating unit configured to re-demodulate the received signal from which the distortion power is subtracted

FARNESE D ET AL: "Pulse superposition: a technique for peak-to-average power ratio reduction in OFDM modulation "PROCEEDINGS OF IEEE INTERNATIONAL CONFERENCE ON COMMUNIATIONS -28 April - 2 May 2002 - NEW YORK, NY, USA, IEEE, PISCATAWAY, NJ, USA LNKD D01:10. 1109/CC. 2002997135 vol. 3, 28 April 2002 (2002-04-28), pages 1682-1685, XP010589773 ISBN: 978-0-7803-7400-3 discloses controlling peak power in OFDM modulation, including receiving the non-linear characteristic from the transmitter as side information.

The present invention is defined in claims 1, 7, 11 and 12 and can reduce interference with signals in adjacent bands.

BRIEF DESCRIPTION OF THE DRAWINGS

Other objects, features and advantages of the present invention will become more apparent from the following detailed description when read in conjunction with the accompanying drawings, in which:

Fig. 1 shows an example of clip in a transmission signal according to an OFDMA scheme;

Fig. 2 shows an example of distortion power caused by clip;

Fig. 3 shows a transmitter in accordance with an embodiment of the present invention;

Fig. 4 shows an example of a modulated signal generating unit according to an OFDMA scheme;

Fig. 5 shows an example of a nonlinear input-output conversion characteristic;

Fig. 6 shows spectra of output signals generated by a transmission distortion power control unit using a nonlinear input-output conversion characteristic;

Fig. 7A shows a first example of a usage status of a system band;

Fig. 7B shows a second example of a usage status of a system band;

Fig. 7C shows a third example of a usage status of a system band;

Fig. 7D shows a fourth example of a usage status of a system band;

Fig. 7E shows a fifth example of a usage status of a system band;

Fig. 8 shows a modification in which a transmitter controls a modulation scheme or a coding scheme;

Fig. 9 shows a modification in which one of plural transmission power amplification units is selected;

Fig. 10 shows a modification using predistortion;

Fig. 11 shows an example of a nonlinear input-output conversion characteristic used for predistortion;

Fig. 12 shows a modification using filtering;

Fig. 13 shows a first modification in which transmission distortion power control and filtering are repeatedly applied;

Fig. 14 shows a second modification in which transmission distortion power control and filtering are repeatedly applied;

Fig. 15 shows a receiver in accordance with an embodiment of the present invention;

Fig. 16 shows an example of a modulated signal generating unit in a receiver;

Fig. 17 shows an example of a transmission distortion power generating unit in a receiver;

Fig. 18 shows a modification of a receiver in which transmission distortion power control and filtering are repeatedly applied;

Fig. 19 shows an example of a transmission distortion power generating unit in a receiver in which transmission distortion power control and filtering are repeatedly applied; and

Fig. 20 shows a modification in which transmission distortion power elimination is repeatedly applied.

## DESCRIPTION OF THE PREFERRED EMBODIMENTS

In an embodiment of the present invention, a frequency sharing system is used, in which a predetermined frequency band is shared by plural users or plural systems. For example, the frequency sharing system may be an OFDMA system.

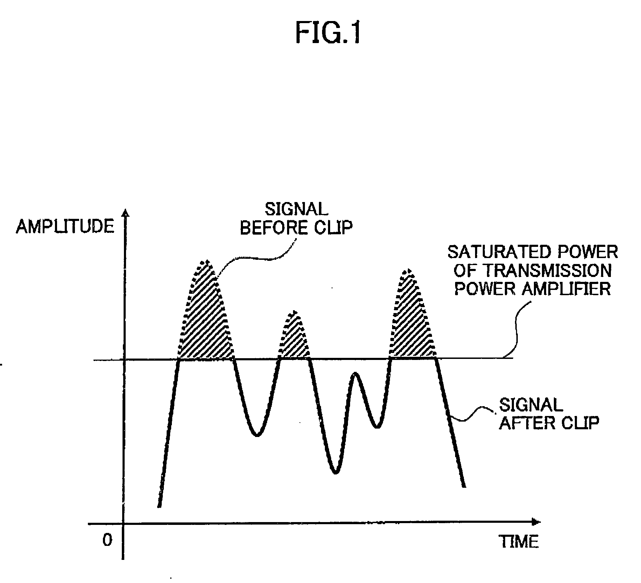

Fig. 1 shows an example of clip in a transmission signal according to an OFDMA scheme. As described above, the transmission signal according to the OFDMA scheme has high peak power compared to average power. As shown in Fig. 1, when a transmission power amplifier in a transmitter amplifies an input signal, signal components above saturated power of the transmission power amplifier are cut (or clipped). For this reason, the output of the transmission power amplifier corresponding to the shaded area in Fig. 1 is equal to the saturated power of the transmission power amplifier.

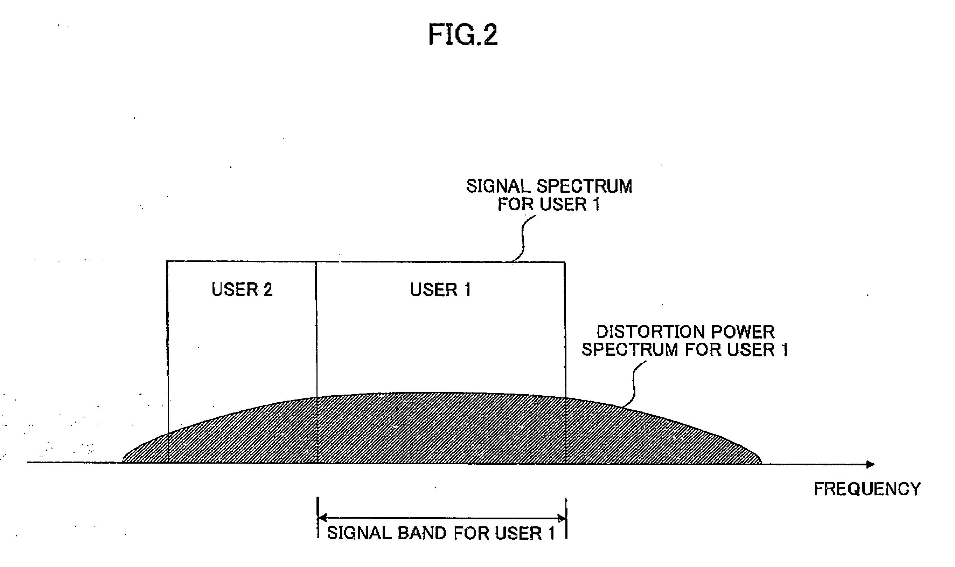

Fig. 2 shows an example of distortion power caused by clip. The distortion power means power of the clipped signal. The distortion power corresponds to the shaded area in Fig. 1.

When the clip occurs, as shown in Fig. 1, the signal is distorted and distortion power (clip noise) spreads beyond the signal band, as shown in Fig. 2. When the clip does not occur, the signal spectrum remains within a desired signal band.

For example, when the usage rate of the system band is low and a band for each user can be sufficiently reserved, multi-user interference caused by distortion power can be reduced by providing guard bands among users. However, when plural users use the same system band and other users use adjacent bands, the distortion power spreading beyond the signal band may interfere with signals of the other users. For example, when a user 2 uses the adjacent band of a user 1, distortion power of the user 1 may interfere with the signal of the user 2.

In order to reduce the distortion power spreading beyond the signal band, it is necessary to increase a backoff value of the transmission power amplifier. However, when the backoff value is increased, the cost of the transmission power amplifier becomes higher and the power efficiency becomes significantly lower. When the transmission power amplifier works on a battery as is the case with a mobile communication terminal, power consumption becomes higher.

In an embodiment of the present invention, in order to reduce interference with signals in adjacent bands, a nonlinear input-output conversion characteristic for converting a signal is determined depending on a usage status of a frequency band. For example, when the adjacent bands are in use, the nonlinear input-output conversion characteristic is determined so as to reduce the spread of the distortion power beyond the signal band. The nonlinear input-output conversion characteristic is a characteristic in which the relationship between an amplitude value of an input signal and an amplitude value of an output signal is expressed as a nonlinear function. The nonlinear input-output conversion characteristic defines an upper limit (saturated output) of the amplitude of the output signal. In this embodiment, assuming that the output signal corresponding to the saturated output is amplified by the transmission power amplifier, the output signal is determined not to be above saturated power of the transmission power amplifier. In this manner, distortion power generated by the transmission power amplifier can be reduced.

Based on the determined nonlinear input-output conversion characteristic, the amplitude of the input signal is converted and the output signal is amplified by the transmission power amplifier. Alternatively, based on the determined nonlinear input-output conversion characteristic, one of plural transmission power amplifiers having different nonlinear input-output conversion characteristics may be selected.

Embodiments and modifications of the present invention are described in detail below with reference to the accompanying drawings.

<Distortion power control using a nonlinear input-output conversion characteristic>

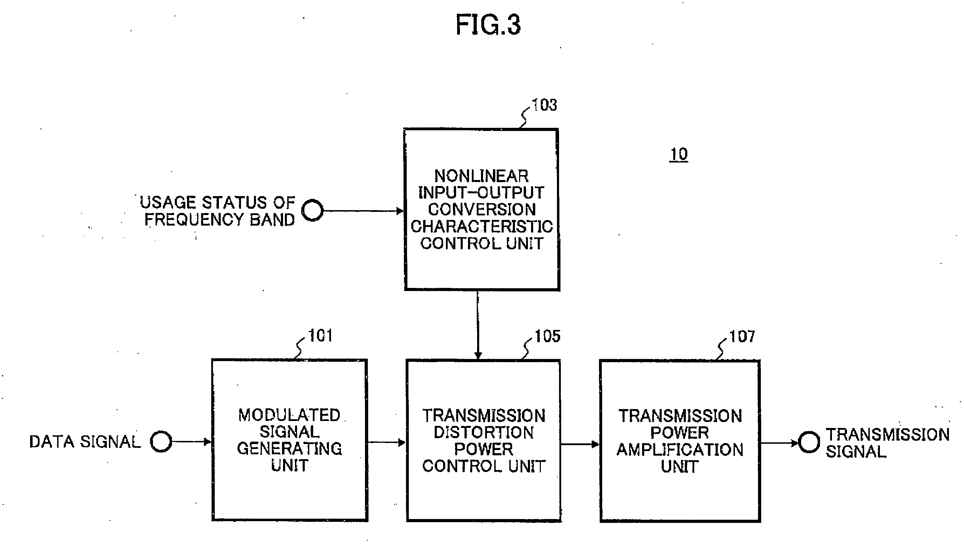

Fig. 3 shows a transmitter 10 in accordance with an embodiment of the present invention. The transmitter 10 is a device for amplifying a modulated signal and transmitting the signal. The transmitter 10 may be included in a base station or a mobile station in a mobile communication system. The transmitter 10 includes a modulated signal generating unit 101, a nonlinear input-output conversion characteristic control unit 103, a transmission distortion power control unit 105, and a transmission power amplification unit 107.

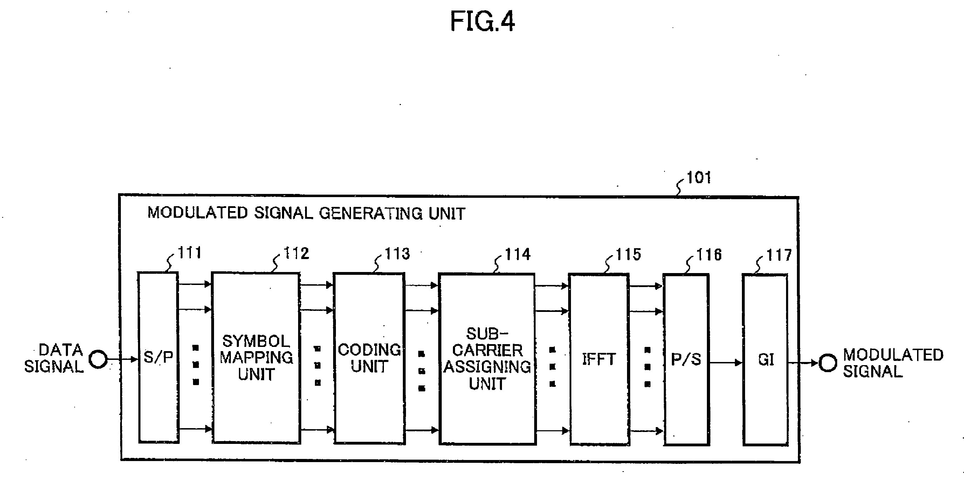

Fig. 4 shows an example of the modulated signal generating unit 101 according to an OFDMA scheme. The modulated signal generating unit 101 includes a serial-parallel converting (S/P) unit 111, a symbol mapping unit 112, a coding unit 113, a sub-carrier assigning unit 114, an Inverse Fast Fourier Transform (IFFT) unit 115, a parallel-serial converting (P/S) unit 116, and a guard interval (GI) unit 117.

The serial-parallel converting unit 111 converts an input signal (data signal) into parallel signals for multicarriers according to the number of sub-carriers to be used. The symbol mapping unit 112 maps the parallel signals to signal constellations which are determined based on the specified modulation scheme. Then, the coding unit 113 encodes the signals using the specified coding type and coding rate. Then, the sub-carrier assigning unit 114 assigns sub-carriers to the symbol-mapped and encoded signals. Then, the symbol-mapped and encoded signals are input to IFFT inputs corresponding to the positions of the assigned sub-carriers. When the IFFT unit 115 performs an Inverse Fast Fourier Transformation of the input signals, modulated signals according to the OFDMA scheme are generated. The parallel-serial converting unit 116 serially converts the modulated signals according to the OFDMA scheme and the guard interval unit 117 adds a guard interval to the signal as a measure against multi-path fading in a propagation path. The guard interval unit 117 adds the guard interval by copying a latter portion of each transmission symbol and inserting it into the beginning of the same transmission symbol.

In this manner, a modulated signal using a portion of the system band may be generated. Since a frequency band is assigned to a user in response to a request from the user according to the OFDMA scheme, the frequency band and the bandwidth used by the user vary depending on the usage status of the system band. When the number of users is small, there may be unassigned bands in the system band.

The transmission distortion power control unit 105 converts the modulated signal generated by the modulated signal generating unit 101 before inputting it to the transmission power amplification unit 107. The transmission distortion power control unit 105 converts the amplitude of the modulated signal using a nonlinear input-output conversion characteristic determined by the nonlinear input-output conversion characteristic control unit 103. As described in detail below, the nonlinear input-output conversion characteristic control unit 103 determines the nonlinear input-output conversion characteristic for converting the signal depending on the usage status of the frequency band. The nonlinear input-output conversion characteristic is a characteristic in which the relationship between an amplitude value of an input signal and an amplitude value of an output signal is expressed as a nonlinear function. The nonlinear input-output conversion characteristic defines an upper limit (saturated output) of the amplitude of the output signal. Assuming that the output signal corresponding to the saturated output is amplified by the transmission power amplification unit 107, the output signal is determined not to be above saturated power of the transmission power amplification unit 107. In this manner, distortion power generated by the transmission power amplification unit 107 can be reduced. It should be noted that a linear input-output conversion characteristic is a characteristic in which the relationship between an amplitude value of an input signal and an amplitude value of an output signal is expressed as a linear function. According to the linear input-output conversion characteristic, the amplitude value of the output signal linearly increases with the increase in the amplitude value of the input signal, and thus there is no upper limit of the output signal.

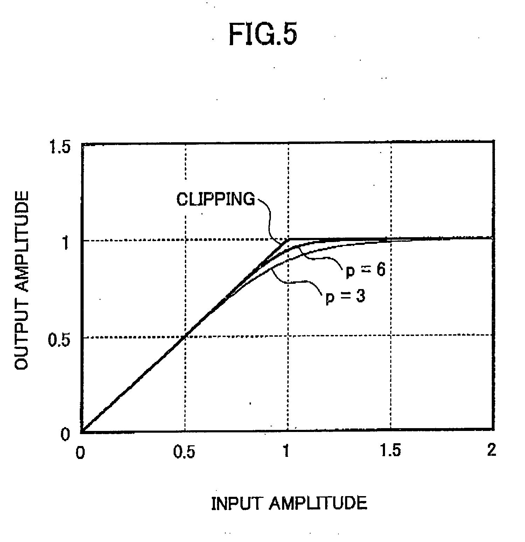

Fig. 5 shows an example of a nonlinear input-output conversion characteristic. Fig. 5 shows the relationship between the amplitude value of the input signal and the amplitude value of the output signal in the transmission distortion power control unit 105. The value 1.0 of the output amplitude in Fig. 5 represents the saturated output, which corresponds to the upper limit of the amplitude of the output signal. The value 1.0 of the input amplitude represents the saturated input corresponding to the saturated output in the case where the amplitude of the input signal is converted according to the linear input-output conversion characteristic.

An example of the nonlinear input-output conversion characteristic is clipping (hard clipping), in which amplitude components above a predetermined value are cut. As shown in Fig. 5, according to clipping, the amplitude of the input signal below the saturated input is converted based on the linear input-output conversion characteristic. When the input signal is above the saturated input, the amplitude value of the output signal is equal to the amplitude value of the saturated output. For example, the nonlinear input-output conversion characteristic is expressed as the following equation (1):

$$A_{out} = \frac{A_{in}}{\left[1 + \left(\frac{A_{in}}{A_0}\right)^{2p}\right]^{\frac{1}{2p}}} \qquad (1)$$

, where $A_{in}$ is the amplitude value of the input signal and $A_{out}$ is amplitude value of the output signal. $A_0$ is the amplitude value at the saturated output and 'p' is a parameter for determining nonlinearity. It should be noted that $p = \infty$ corresponds to clipping. In Fig. 5, two nonlinear input-output conversion characteristics other than clipping are shown. The smaller the parameter 'p' in the equation (1), the smoother the conversion characteristic close to the saturated output. Specifically, the amplitude value of the output signal corresponding to an amplitude value of a predetermined input signal close to the saturated output increases with the decrease in the parameter 'p'. Typically, the amplitude value of the output signal increases with the increase in the amplitude value of the input signal. With the decrease in the parameter 'p', the amplitude value of the output signal corresponding to the saturated input decreases and the amplitude value of the input signal at the point where the output signal can be approximately treated as the saturated output increases.

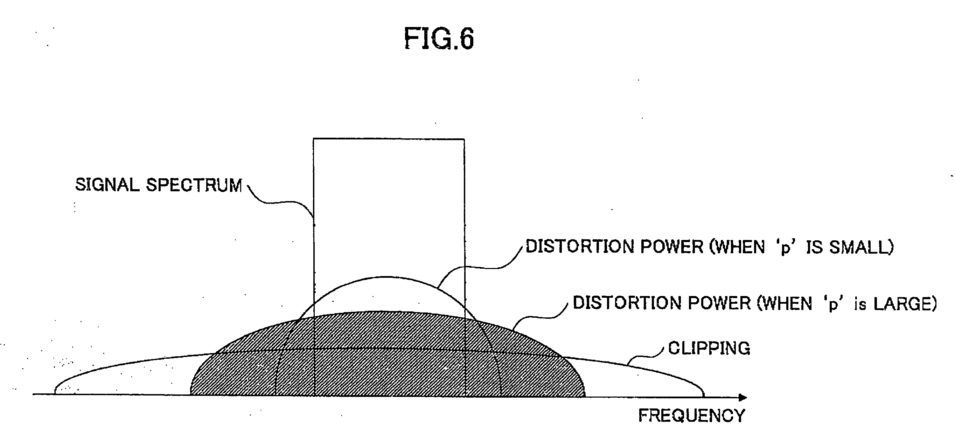

Fig. 6 shows spectra of output signals generated by the transmission distortion power control unit 105 using nonlinear input-output conversion characteristics. As shown in Fig. 6, according to clipping, distortion power within the signal band is relatively low, but the distortion power spreads beyond the signal band. On the other hand, when the nonlinear input-output conversion characteristic having a smooth conversion characteristic close to the saturated output is used, distortion power within the signal band is high, but the distortion power spreading beyond the signal band can be reduced compared to the case of clipping. Specifically, with the decrease in the value 'p' in the equation (1), distortion power within the signal band increases, but the distortion power spreading beyond the signal band decreases. Thus, distortion power spreading beyond the signal band can be controlled by changing nonlinearity of input-output conversion in the nonlinear input-output conversion characteristic control unit 103.

For example, when adjacent bands of the user are in use, the nonlinear input-output conversion characteristic control unit 103 determines the nonlinear input-output conversion characteristic to be a smooth conversion characteristic close to the saturated output so as to reduce the spread of the distortion power beyond the signal band. For example, the nonlinear input-output conversion characteristic control unit 103 decreases the value 'p' in the equation (1). On the other hand, when the adjacent bands of the user are not in use, the nonlinear input-output conversion characteristic control unit 103 determines the nonlinear input-output conversion characteristic to be a characteristic of clipping or approximately clipping so as to reduce the distortion power within the signal band. For example, the nonlinear input-output conversion characteristic control unit 103 increases the value 'p' in the equation (1). In this manner, the nonlinear input-output conversion characteristic control unit 103 determines the nonlinear input-output conversion characteristic depending on the usage status of the frequency band.

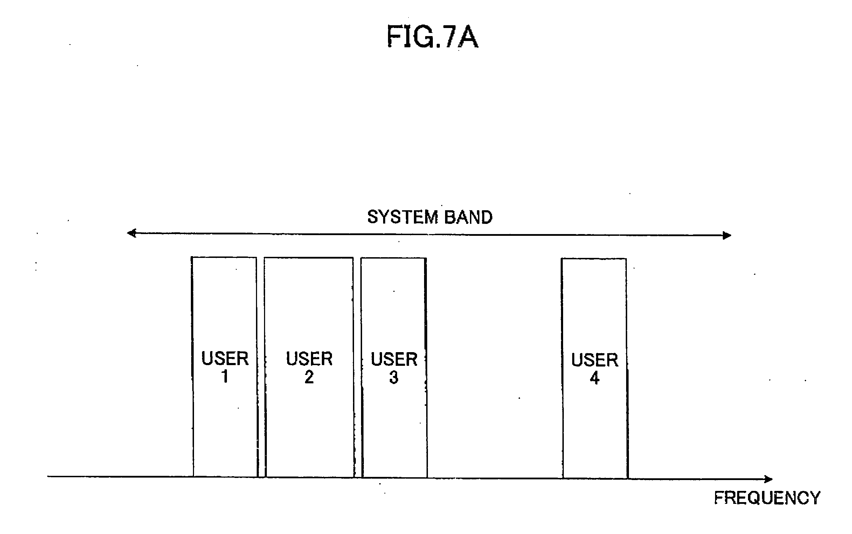

Fig. 7A shows a first example of the usage status of the system band. For example, since the adjacent bands of the user 2 are used by other users 1 and 3, the nonlinear input-output conversion characteristic control unit 103 for the user 2 decreases the value 'p' so as to reduce the spread of the distortion power beyond the signal band. For example, since the adjacent bands of the user 4 are not used by any other user, the nonlinear input-output conversion characteristic control unit 103 for the user 4 increases the value 'p' so as to reduce the distortion power within the signal band. Alternatively, the nonlinear input-output conversion characteristic control unit 103 may decrease the value 'p' with the decrease of the unused adjacent bands so as to reduce the spread of the distortion power beyond the signal band. Conversely, the nonlinear input-output conversion characteristic control unit 103 may increase the value 'p' with the increase of the unused adjacent bands so as to reduce the distortion power within the signal band.

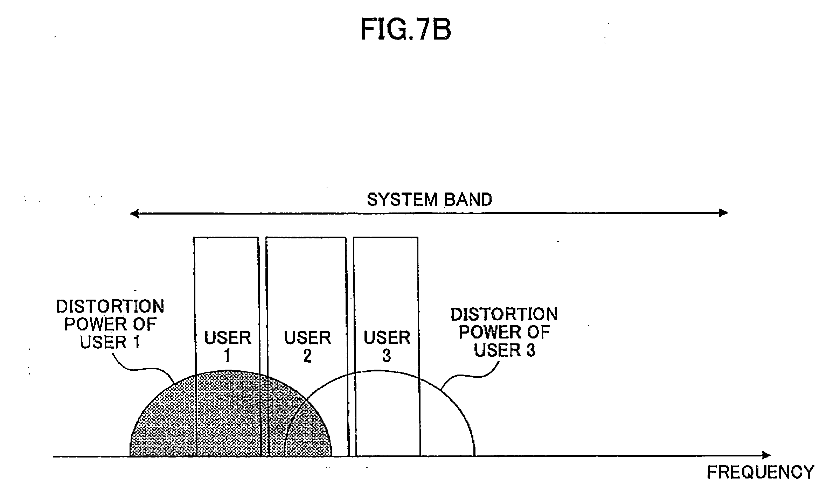

Fig. 7B shows a second example of the usage status of the system band. For example, it is assumed that the frequency band adjacent to the user 2 needs to be assigned to the user 3, when mutually adjacent frequency bands are used by the users 1 and 2. In this case, since the signal of the user 2 already has been interfered with by the distortion power of the user 1, reception quality of the user 2 may be degraded when the signal of the user 2 is further interfered with by the distortion power of the user 3. Accordingly, the nonlinear input-output conversion characteristic control unit 103 may estimate the amount of interference in the adjacent band in addition to the usage status in the adjacent band and control the nonlinear input-output conversion characteristic based on the usage status in the adjacent band and the estimated amount of interference. For example, when the adjacent band is in use and the amount of interference in the adjacent band is above a predetermined threshold, the nonlinear input-output conversion characteristic control unit 103 may decrease the value 'p' so as to reduce the spread of the distortion power beyond the signal band. Alternatively, the nonlinear input-output conversion characteristic control unit 103 may determine the value 'p' such that the amount of interference in the adjacent band when the frequency band is assigned to a new user is below a predetermined threshold. In this manner, when the frequency band is assigned to the new user, the influence of the distortion power on the existing users to which frequency bands have been assigned can be reduced.

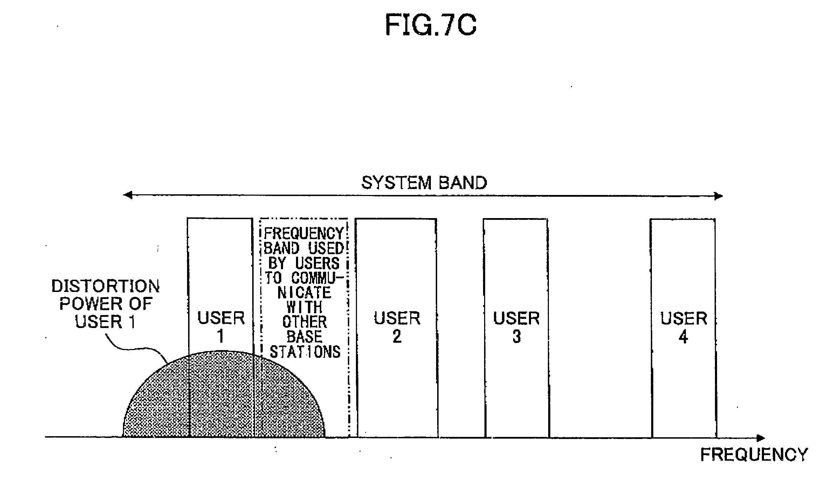

Fig. 7C shows a third example of the usage status of the system band. For example, a cellular system used as a cellular phone system includes base stations (BSs) and mobile stations (MSs), and plural base stations use the same frequency bands. In this case, it is necessary to consider the influence of the distortion power on frequency bands used by other base stations. For example, it is assumed that the frequency band between the frequency band for the user 1 and the frequency band for the user 2 is used by other base stations. From the viewpoint of the base station in communication with the users 1 and 2, the frequency band between the frequency band for the user 1 and the frequency band for the user 2 is not in use. When the base station in communication with the users 1 and 2 increases the value 'p' depending on the usage status of the frequency band within the base station and increases the spread of the distortion power beyond the signal band, the distortion power may interfere with signals in other base stations. Accordingly, the nonlinear input-output conversion characteristic control unit 103 may control the nonlinear input-output conversion characteristic based on the usage status of the adjacent bands by neighbor base stations. In this manner, the influence of the distortion power on users who use the adjacent bands to communicate with the neighbor base stations can be reduced.

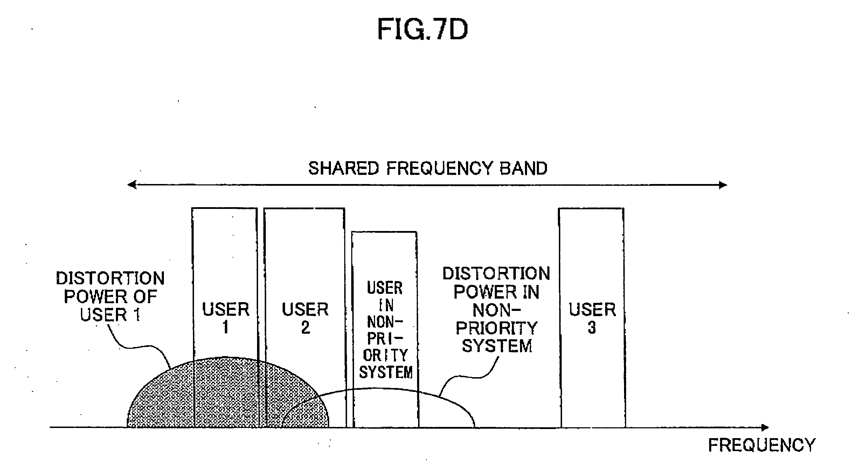

Fig. 7D shows a fourth example of the usage status of the system band. The environment in which plural systems with different priorities coexist is an example of a frequency sharing system, in which predetermined frequency bands are shared by plural systems. For example, the predetermined frequency bands may be shared by a priority system and a non-priority system. When the priority system has already been using some frequency bands within the shared frequency bands and the non-priority system attempts to use a frequency band within the shared frequency bands, it is necessary to consider the influence on the priority system. For example, it is assumed that the frequency band adjacent to the user 2 needs to be assigned to a user in the non-priority system, when the users 1 and 2 in the priority system use portions of the system band. In this case, since the signal of the user 2 already has been interfered with by the distortion power of the user 1, reception quality of the user 2 may be degraded when the signal of the user 2 is further interfered with by the distortion power in the non-priority system. Accordingly, the nonlinear input-output conversion characteristic control unit 103 in the non-priority system may estimate the amount of interference in the adjacent band in addition to the usage status in the adjacent band and control the nonlinear input-output conversion characteristic based on the usage status in the adjacent band and the estimated amount of interference. In this manner, when the frequency band is assigned to a new user, the influence of the distortion power on the existing users to which frequency bands have been assigned can be reduced.

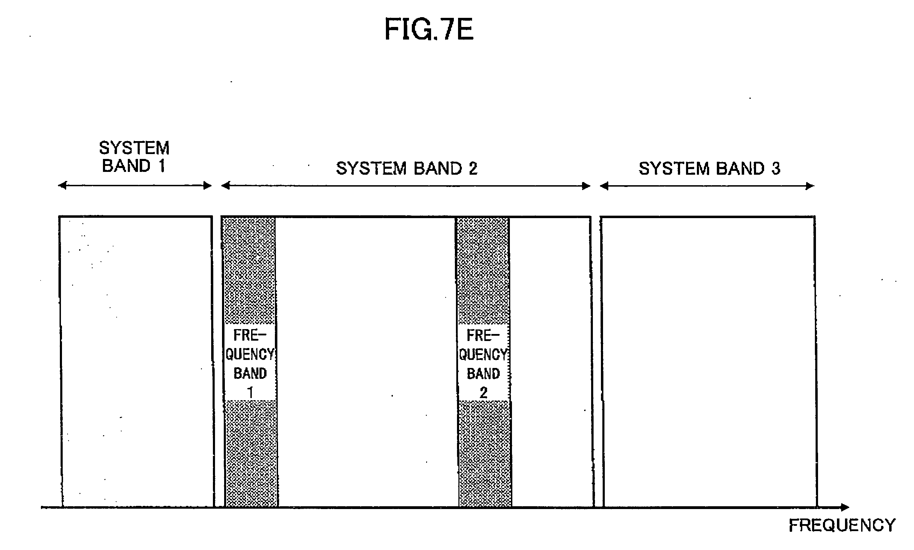

Fig. 7E shows a fifth example of the usage status of the system band. When plural systems use frequency bands, interference with other neighbor systems is highly restricted. For example, since the adjacent band of the frequency band 1 positioned at the end of the system band is used in another system, the nonlinear input-output conversion characteristic control unit 103 decreases the value 'p' so as to reduce the spread of the distortion power beyond the signal band. For example, since the adjacent bands of the frequency band 2 are not used by any other system, the nonlinear input-output conversion characteristic control unit 103 increases the value 'p' so as to reduce the distortion power within the signal band. Alternatively, the nonlinear input-output conversion characteristic control unit 103 may decrease the value 'p' with the decrease in distance between the frequency band used for transmitting the modulated signal and the end of the system band so as to reduce the spread of the distortion power beyond the signal band. Conversely, the nonlinear input-output conversion characteristic control unit 103 may increase the value 'p' with the increase in distance between the frequency band used for transmitting the modulated signal and the end of the system band so as to reduce the distortion power within the signal band.

The nonlinear input-output conversion characteristic control unit 103 may identify or recognize the usage status of the frequency band using frequency band information determined by the scheduler in the base station. Alternatively, the nonlinear input-output conversion characteristic control unit 103 may identify or recognize the usage status of the frequency band by detecting signals in the adjacent bands.

The transmission distortion power control unit 105 converts the modulated signal using the nonlinear input-output conversion characteristic determined by the nonlinear input-output conversion characteristic control unit 103. The modulated signal converted by the transmission distortion power control unit 105 is amplified by the transmission power amplification unit 107 for transmission.

Typically, the transmission power amplification unit 107 has a nonlinear input-output conversion characteristic which defines an upper limit (saturated output) of output signal power. By determining the saturated output of the nonlinear input-output conversion characteristic used by the transmission distortion power control unit 105 to be lower than or equal to the saturated output used by the transmission power amplification unit 107, distortion power generated by the transmission power amplification unit 107 can be reduced.

<Modification in which a transmitter controls a modulation scheme or a coding scheme>

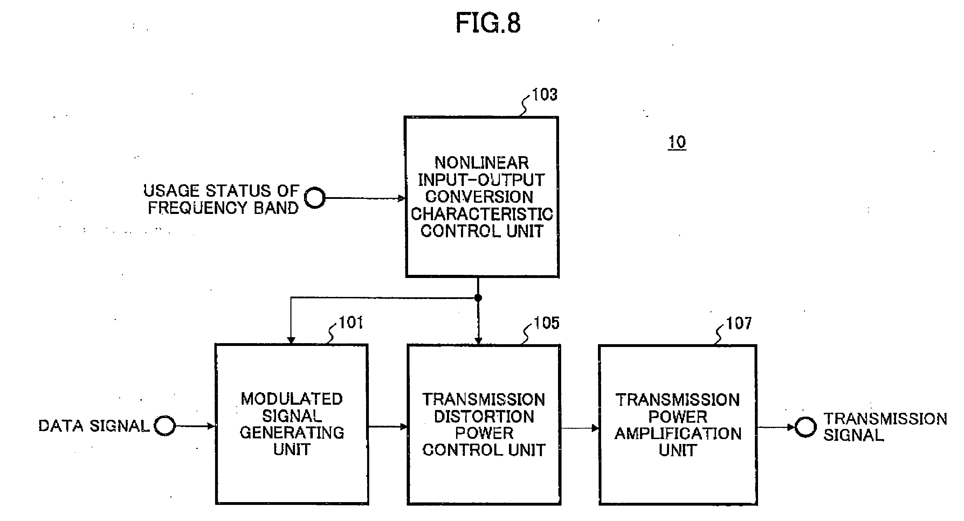

Fig. 8 shows a modification in which the transmitter 10 controls a modulation scheme or a coding scheme.

As described above with reference to Fig. 6, when the nonlinear input-output conversion characteristic control unit 103 controls the nonlinear input-output conversion characteristic depending on the usage status of the frequency band, the spread of the distortion power beyond the signal band (radiation beyond the signal band) as well as the distortion power within the signal band varies. For this reason, modulation accuracy of the modulated signal may be degraded, and thus reception power in a receiver may be degraded.

Typically, a modulation scheme and a coding scheme of a transmission signal from a mobile station (MS) are determined by a base station in the cellular system. It should be noted that the coding scheme includes a coding type and a coding rate. However, when the nonlinear input-output conversion characteristic control unit 103 in the mobile station controls the nonlinear input-output conversion characteristic, modulation accuracy of the transmission signal in the mobile station may be actually poorer than modulation accuracy recognized by the base station.

In order to avoid this situation, the nonlinear input-output conversion characteristic control unit 103 estimates distortion power within the signal band based on the determined nonlinear input-output conversion characteristic, and then inputs the estimation result to the modulated signal generating unit 101. The modulated signal generating unit 101 determines a modulation scheme or a coding scheme based on the estimation result. In this manner, degradation of modulation accuracy and reception quality, which is caused by the control of the nonlinear input-output conversion characteristic by the nonlinear input-output conversion characteristic control unit 103 in the mobile station, can be alleviated.

<Modification in which one of plural transmission power amplification units is selected>

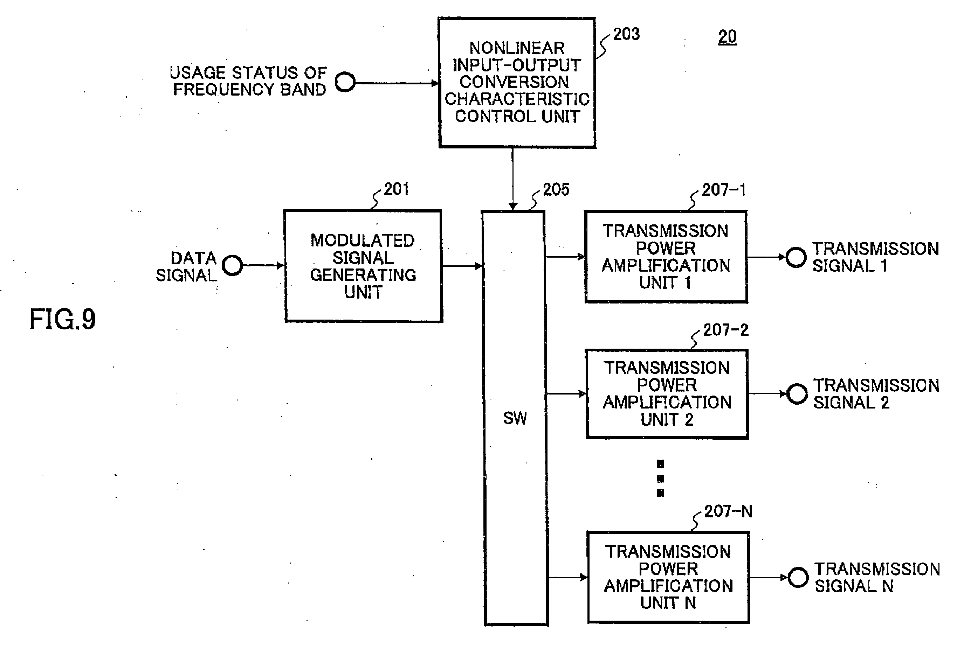

Fig. 9 shows a modification in which one of plural transmission power amplification units is selected. A transmitter 20 shown in Fig. 9 includes a modulated signal generating unit 201, a nonlinear input-output conversion characteristic control unit 203, a selecting unit 205, and transmission power amplification units 207-1 to 207-N. The modulated signal generating unit 201 may generate a modulated signal as described above with reference to Fig. 4.

Each of the transmission power amplification units 207-1 to 207-N has a nonlinear input-output conversion characteristic in which the relationship between an amplitude value of an input signal and an amplitude value of an output signal is expressed as a nonlinear function. The nonlinear input-output conversion characteristics of the transmission power amplification units 207-1 to 207-N are mutually different. For example, the transmission power amplification unit 207-1 may have a characteristic of p = 3, the transmission power amplification unit 207-2 may have a characteristic of p = 6, and the transmission power amplification unit 207-N may have a characteristic of $p = \infty$ in the equation (1).

The nonlinear input-output conversion characteristic control unit 203 determines one of the nonlinear input-output conversion characteristics of the transmission power amplification units 207-1 to 207-N for converting the signal depending on the usage status of the frequency band. For example, when adjacent bands are in use, the nonlinear input-output conversion characteristic control unit 203 may determine the characteristic of p = 3. On the other hand, when the adjacent bands are not in use, the nonlinear input-output conversion characteristic control unit 203 may determine the characteristic of $p = \infty$. Furthermore, the nonlinear input-output conversion characteristic control unit 203 may determine the value 'p' based on the widths of the unused adjacent bands. Alternatively, the nonlinear input-output conversion characteristic control unit 203 may determine the value 'p' in consideration of the amount of interference in the adjacent bands, based on the usage status of the adjacent bands by neighbor base stations, or in consideration of the amount of interference in the priority system. Alternatively, when the adjacent band is used in another system, the nonlinear input-output conversion characteristic control unit 203 may determine the characteristic of p = 3. On the other hand, when the adjacent band is not used in another system, the nonlinear input-output conversion characteristic control unit 203 may determine the characteristic of $p = \infty$. Furthermore, the nonlinear input-output conversion characteristic control unit 203 may determine the value 'p' based on the distance from the end of the system band.

The selecting unit 205 selects one of the transmission power amplification units 207-1 to 207-N based on the determined nonlinear input-output conversion characteristic, and supplies the modulated signal generated by the modulated signal generating unit 201 to the selected transmission power amplification unit. For example, when the nonlinear input-output conversion characteristic control unit 203 determines the characteristic of p = 3, the selecting unit 205 may select the transmission power amplification unit 207-1 having the characteristic of p = 3.

The transmission power amplification units 207-1 to 207-N amplify the modulated signal for transmission.

In this manner, the transmitter 20 achieves the same effect as the transmitter 10 shown Fig. 3, by selecting one of the transmission power amplification units 207-1 to 207-N having different nonlinear input-output conversion characteristics.

<Modification using predistortion>

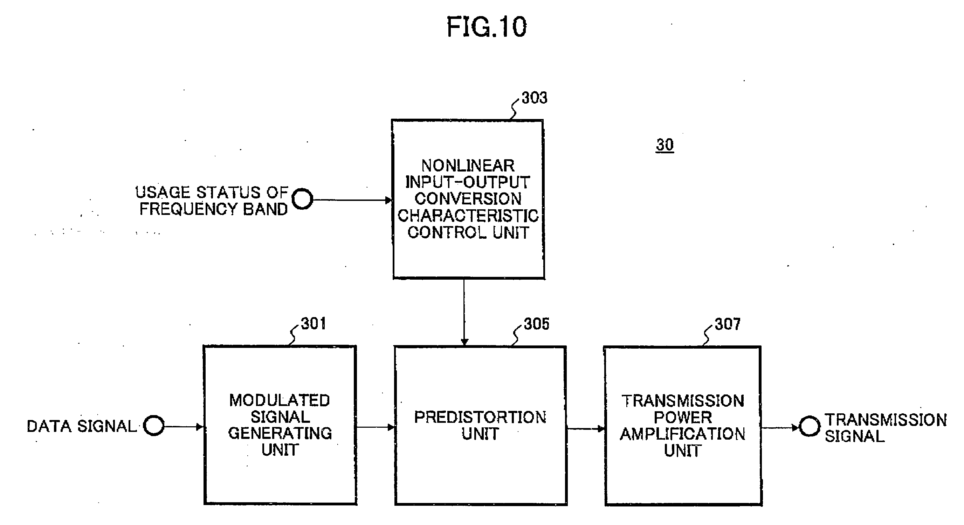

Fig. 10 shows a modification using predistortion. Predistortion is a technology for compensating for nonlinear distortion in a transmission power amplifier, by converting an input signal of the transmission power amplifier in advance using an inverse characteristic of the nonlinear distortion characteristic (the nonlinear input-output conversion characteristic) in the transmission power amplifier. A transmitter 30 shown in Fig. 10 includes a modulated signal generating unit 301, a nonlinear input-output conversion characteristic control unit 303, a predistortion unit 305, and a transmission power amplification unit 307. The modulated signal generating unit 301 may generate a modulated signal as described above with reference to Fig. 4.

Typically, the transmission power amplification unit 307 has a nonlinear input-output conversion characteristic in which the relationship between an amplitude value of an input signal and an amplitude value of an output signal is expressed as a nonlinear function. According to predistortion, the input signal of the transmission power amplification unit 307 is converted using an inverse characteristic of this nonlinear input-output conversion characteristic.

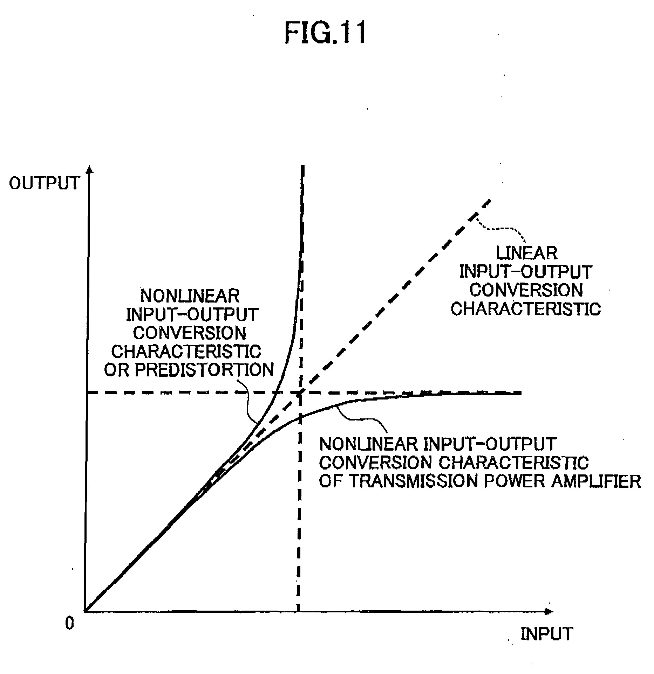

Fig. 11 shows an example of a nonlinear input-output conversion characteristic used for predistortion. The nonlinear input-output conversion characteristic used for predistortion may be an inverse characteristic of the equation (1). The inverse characteristic is expressed as the following equation (2).

$$A_{out} = \frac{A_{in}}{\left[1 - \left(\frac{A_{in}}{A_0}\right)^{2p}\right]^{\frac{1}{2p}}} \qquad (2)$$

In the transmitter 30 shown in Fig. 10, the predistortion unit 305 compensates for nonlinear distortion, such that a total input-output conversion characteristic in the transmitter 30 is equal to a nonlinear input-output conversion characteristic determined by the nonlinear input-output conversion characteristic control unit 303. Specifically, the result of multiplication of the nonlinear input-output conversion characteristic of the predistortion unit 305 and the nonlinear input-output conversion characteristic of the transmission power amplification unit 307 is adapted to be equal to the nonlinear input-output conversion characteristic determined by the nonlinear input-output conversion characteristic control unit 303.

The nonlinear input-output conversion characteristic control unit 303 determines the total input-output conversion characteristic in the transmitter 30 depending on the usage status of the frequency band. For example, when adjacent bands are in use, the nonlinear input-output conversion characteristic control unit 303 may determine the total characteristic of p = 3. On the other hand, when the adjacent bands are not in use, the nonlinear input-output conversion characteristic control unit 303 may determine the total characteristic of p = ∞. Furthermore, the nonlinear input-output conversion characteristic control unit 303 may determine the value 'p' based on the widths of the unused adjacent bands. Alternatively, the nonlinear input-output conversion characteristic control unit 303 may determine the value 'p' in consideration of the amount of interference in the adjacent bands, based on the usage status of the adjacent bands by neighbor base stations, or in consideration of the amount of interference in the priority system. Alternatively, when the adjacent band is used in another system, the nonlinear input-output conversion characteristic control unit 303 may determine the characteristic of p = 3. On the other hand, when the adjacent band is not used in another system, the nonlinear input-output conversion characteristic control unit 303 may determine the characteristic of p = ∞. Furthermore, the nonlinear input-output conversion characteristic control unit 303 may determine the value 'p' based on the distance from the end of the system band.

The predistortion unit 305 determines a nonlinear input-output conversion characteristic for predistortion and compensates for nonlinear predistortion according to predistortion, such that an output signal corresponding to the determined nonlinear input-output conversion characteristic can be obtained by the transmission power amplification unit 307.

The transmission power amplification unit 307 amplifies the modulated signal for transmission.

In this manner, the transmitter 30 using predistortion achieves the same effect as the transmitter 10 shown Fig. 3.

<Modification using filtering>

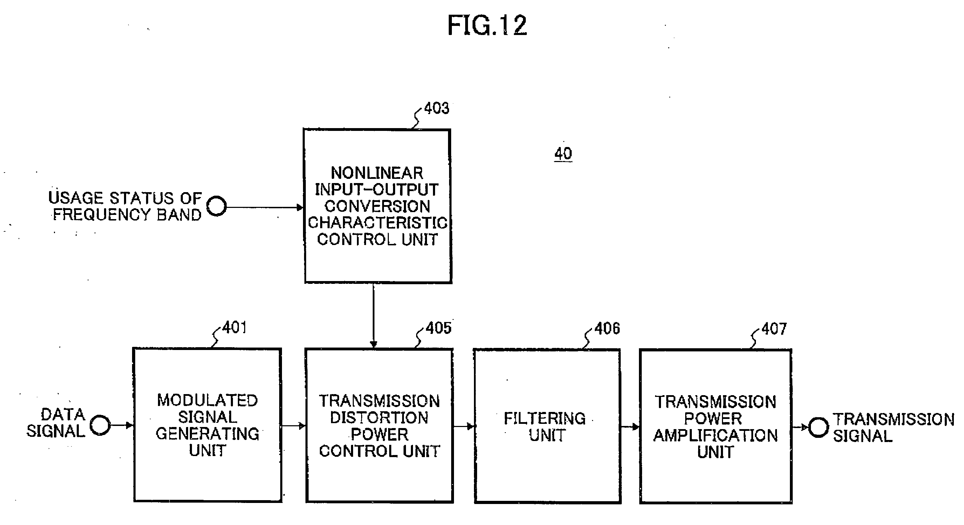

Fig. 12 shows a modification using filtering. A transmitter 40 shown in Fig. 12 includes a modulated signal generating unit 401, a nonlinear input-output conversion characteristic control unit 403, a transmission distortion power control unit 405, a filtering unit 406, and a transmission power amplification unit 407. The modulated signal generating unit 401 may generate a modulated signal as described above with reference to Fig. 4.

The nonlinear input-output conversion characteristic control unit 403 determines a nonlinear input-output conversion characteristic for converting the signal depending on the usage status of the frequency band, as described above with reference to Fig. 3.

The transmission distortion power control unit 405 converts the modulated signal using the nonlinear input-output conversion characteristic determined by the nonlinear input-output conversion characteristic control unit 403, as described above with reference to Fig. 3. As described above with reference to Fig. 6, the spectrum of the output signal generated by the transmission distortion power control unit 405 spreads beyond the signal band.

The filtering unit 406 eliminates distortion power spreading beyond the signal band in whole or in part. In other words, the filtering unit 406 limits the signal band.

The transmission power amplification unit 407 amplifies the filtered signal for transmission. By limiting the signal band in the filtering unit 406, the spread (radiated power) of the output signal from the transmission power amplification unit 407 beyond the signal band can be reduced.

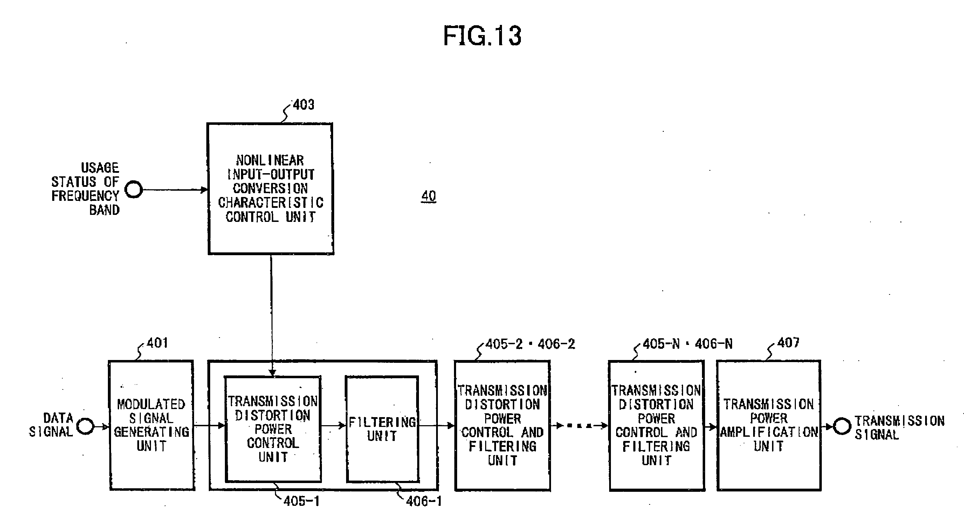

Fig. 13 shows a first modification in which transmission distortion power control and filtering are repeatedly applied. The transmitter 40 shown in Fig. 13 includes plural transmission distortion power control units 405-1 to 405-N and plural filtering units 406-1 to 406-N. In Fig. 13, the transmission distortion power control unit 405-2 (405-N) and the filtering unit 406-2 (406-N) are combined as a transmission distortion power control and filtering unit 405-2, 406-2 (405-N, 406-N).

As described above, when the filtering unit 406 limits the signal band, the radiated power beyond the signal band can be reduced at the input of the transmission power amplification unit 407. However, peak power may increase by eliminating the radiated power beyond the signal band. When the peak power is higher than saturated power, the radiation of the peak power beyond the signal band is generated at the output of the transmission power amplification unit 407. Depending on the level of the peak power, the effect of reducing the radiated power beyond the signal band by the filtering unit 406 may become less. In order to avoid this situation, the plural transmission distortion power control units 405-1 to 405-N and the plural filtering units 406-1 to 406-N repeatedly apply transmission distortion power control and filtering to eliminate the radiated power beyond the signal band and to reduce peak power. As a result, the radiated power beyond the signal band can be reduced at the output of the transmission power amplification unit 407.

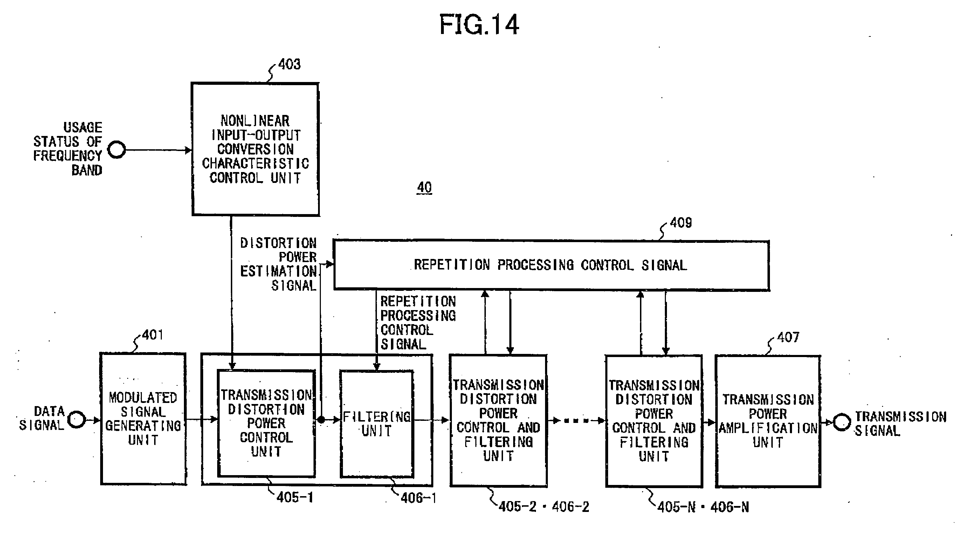

Fig. 14 shows a second modification in which transmission distortion power control and filtering are repeatedly applied. The transmitter 40 shown in Fig. 14 further includes a repetition processing control unit 409.

The repetition processing control unit 409 controls the number of repetitions of transmission distortion power control and the number of repetitions of filtering, such that radiated power spreading beyond the signal band is below desired power. Each of the transmission distortion power control units 405-1 to 405-N estimates distortion power spreading beyond the signal band and inputs the estimation result as a distortion power estimation signal to the repetition processing control unit 409. For example, when the transmission distortion power control units 405-1 to 405-N perform transmission distortion power control in baseband, the transmission distortion power control units 405-1 to 405-N can easily estimate distortion power spreading beyond the signal band from the signal waveform at the output of the transmission distortion power control unit on the frequency axis.

The repetition processing control unit 409 receives the distortion power estimation signal and determines whether distortion power spreading beyond the signal band is below the desired power. For example, when the distortion power spreading beyond the signal band in the transmission distortion power control unit 405-2 is below the desired power, the repetition processing control unit 409 instructs the filtering unit 406-2 not to apply filtering. Furthermore, the repetition processing control unit 409 instructs the transmission distortion power control units 405-3 to 405-N and the filtering units 406-3 to 406-N not to apply transmission distortion power control and filtering, respectively. By controlling the number of repetitions, peak power caused by filtering can be reduced, and as a result, the radiated power beyond the signal band can be reduced at the output of the transmission power amplification unit 407.

<Configuration of a receiver>

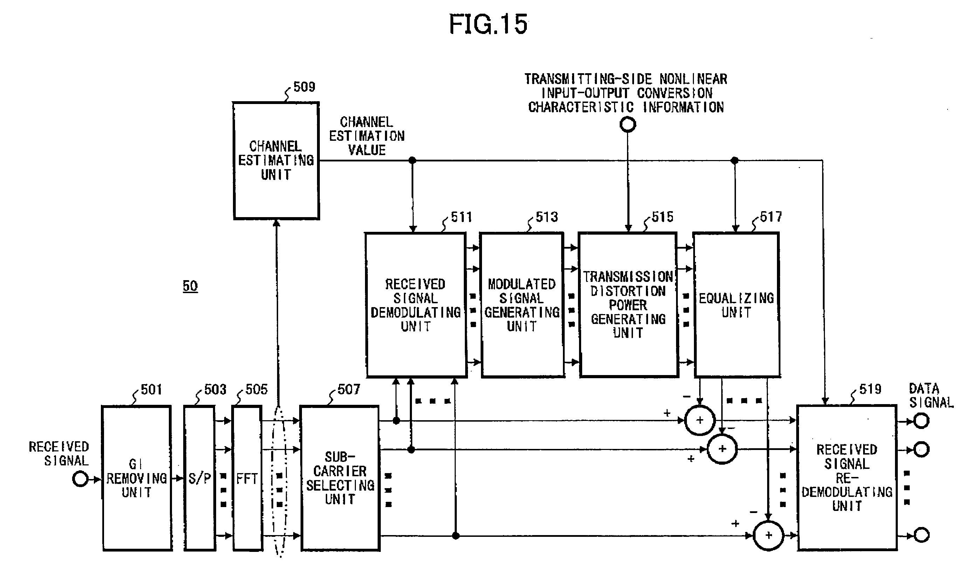

Fig. 15 shows a receiver 50 in accordance with an embodiment of the present invention. The receiver 50 is a device for receiving and demodulating a signal transmitted from a transmitter. The receiver 50 may be included in a base station or a mobile station in a mobile communication system. As described above, when the nonlinear input-output conversion characteristic having a smooth conversion characteristic close to the saturated output is used, distortion power spreading beyond the signal band can be reduced, but the distortion power within the signal band becomes high. As a result, reception quality in the receiver 50 may be degraded. In order to avoid this situation, the receiver 50 eliminates distortion power caused by the nonlinear input-output conversion characteristic, which is determined by the nonlinear input-output conversion characteristic control unit in the transmitter. In this embodiment, the receiver eliminates distortion power on the frequency axis according to the OFDMA scheme.

The receiver 50 includes a guard interval (GI) removing unit 501, a serial-parallel converting (S/P) unit 503, a Fast Fourier Transform (FFT) unit 505, a sub-carrier selecting unit 507, a channel estimating unit 509, a received signal demodulating unit 511, a modulated signal generating unit 513, a transmission distortion power generating unit 515, an equalizing unit 517, and a received signal re-demodulating unit 519.

First, a received signal is demodulated by the receiver 50. For example, the guard interval removing unit 501 removes the guard interval, and then serial-parallel converting unit 503 converts the received signal into parallel signals. The FFT unit 505 performs a Fast Fourier Transformation of the parallel signals and the sub-carrier selecting unit 507 selects only the received (parallel) signals corresponding to the sub-carriers used by the receiver 50. The received signal demodulating unit 511 demodulates the selected received signal for each sub-carrier, using a channel estimation value estimated by the channel estimating unit 509. When the demodulated signals have no error, the receiver need not eliminate distortion power.

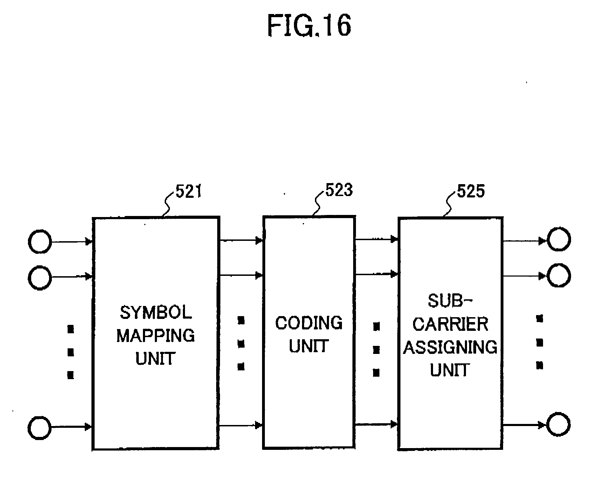

When the demodulated signals have an error, the modulated signal generating unit 513 re-modulates the demodulated signals. Fig. 16 shows an example of the modulated signal generating unit 513. The modulated signal generating unit 513 includes a symbol mapping unit 521, a coding unit 523, and a sub-carrier assigning unit 525. The symbol mapping unit 521 maps the demodulated signals to signal constellations which are determined based on the specified modulation scheme. Then, the coding unit 523 encodes the signals using the specified coding type and coding rate. Then, the sub-carrier assigning unit 525 assigns sub-carriers used by the receiver 50 to the symbol-mapped and encoded signals.

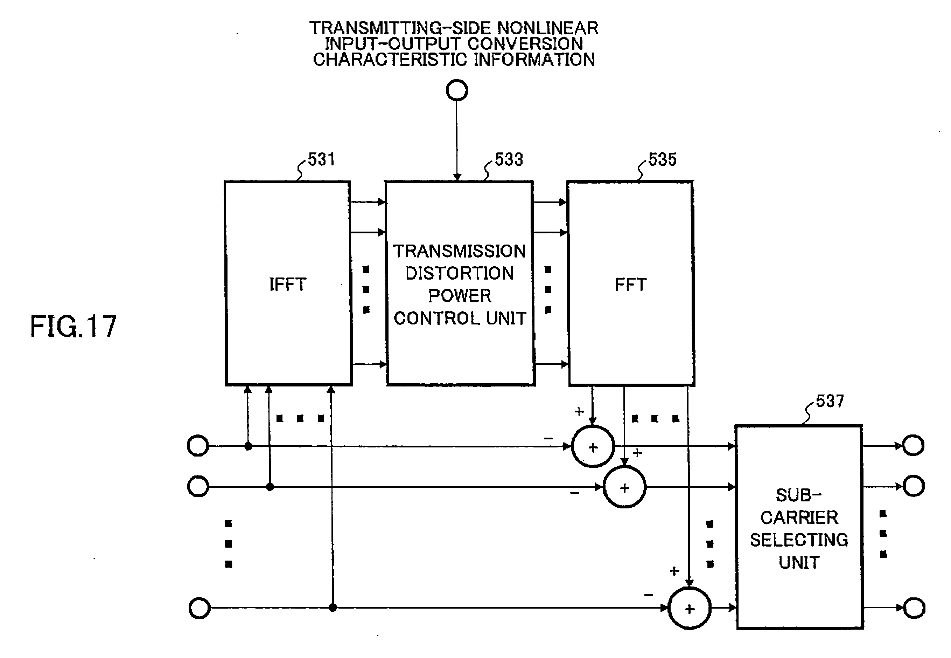

The transmission distortion power generating unit 515 converts the amplitudes of the signals to which the sub-carriers are assigned based on the same nonlinear input-output conversion characteristic as that of the transmitter, and then calculates distortion power. Fig. 17 shows an example of the transmission distortion power generating unit 515. The transmission distortion power generating unit 515 includes an Inverse Fast Fourier Transform (IFFT) unit 531, a transmission distortion power control unit 533, a Fast Fourier Transform (FFT) unit 535, and a sub-carrier selecting unit 537. The Inverse Fast Fourier Transform unit 531 transforms the signals on the frequency axis into the signals on the time axis. The transmission distortion power control unit 533 converts the amplitudes of the signals on the time axis, using the same nonlinear input-output conversion characteristic as that used by the transmitter. It should be noted that the nonlinear input-output conversion characteristic used by the transmission distortion power control unit 533 is the same as the nonlinear input-output conversion characteristic used by the transmitter, and thus needs to be transmitted from the transmitter. The receiver 50 may receive the nonlinear input-output conversion characteristic used by the transmitter as transmitting-side nonlinear input-output conversion characteristic information. The Fast Fourier Transform unit 535 transforms the signals generated by the transmission distortion power control unit 533 into the signals on the frequency axis. Distortion power is calculated by the comparison between the signals output from the Fast Fourier Transform unit 535 and the original signals on the frequency axis. Specifically, the distortion power is calculated by subtracting the original signals on the frequency axis from the signals output from the Fast Fourier Transform unit 535. Then, the sub-carrier selecting unit 537 selects sub-carriers used by the receiver 50.

The equalizing unit 517 converts the calculated distortion power depending on channel fluctuations on the transmission channel, using a channel estimation value estimated by the channel estimating unit 509.

Finally, the calculated distortion power is subtracted from the received (parallel) signals for the respective sub-carriers selected by the sub-carrier selecting unit 507. Thus, the distortion power is eliminated from the received signal. The received signal re-demodulating unit 519 demodulates the signal from which the distortion power is eliminated for each sub-carrier. In this manner, distortion power generated by the transmitter can be eliminated by the receiver 50, and as a result, reception quality in the receiver 50 can be improved.

As described above, the nonlinear input-output conversion characteristic used by the receiver 50 is the nonlinear input-output conversion characteristic determined by the nonlinear input-output conversion characteristic control unit 103, 203, 303, or 403 in the transmitter, rather than the time-varying conversion characteristic of the transmission power amplification unit 107, 207, 307, or 407. For example, when the nonlinear input-output conversion characteristic expressed as the equation (1) is used in the transmitter, the transmitter may transmits the value 'p' to the receiver as transmitting-side nonlinear input-output conversion characteristic information. The transmission distortion power generating unit 515 in the receiver 50 can generate distortion power using the equation (1) to eliminate distortion power from the received signal.

<Modification in which transmission distortion power control and filtering are repeatedly applied>

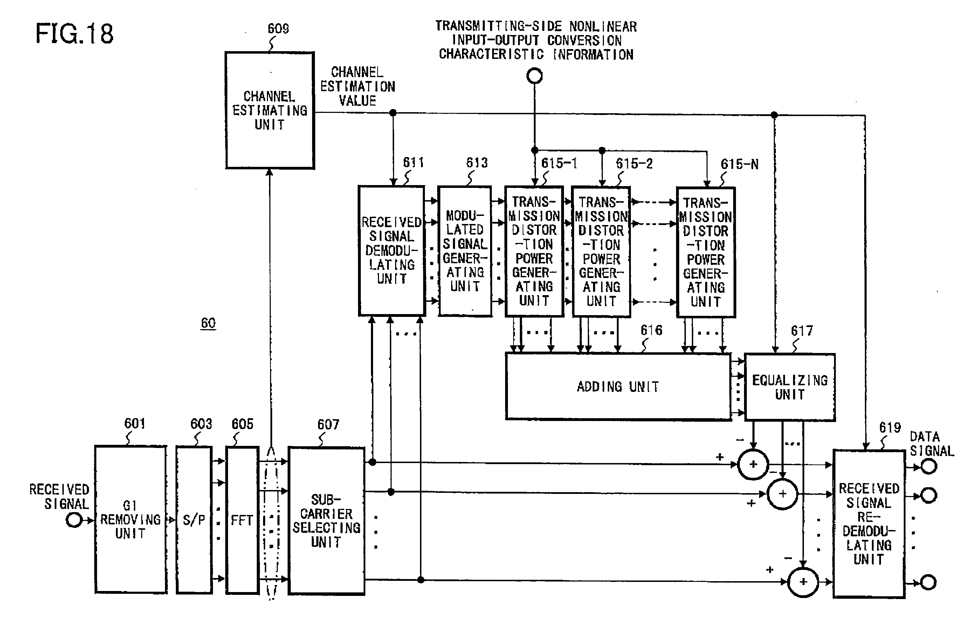

Fig. 18 shows a receiver 60 in which transmission distortion power control and filtering are repeatedly applied. As described above with reference to Fig. 13, the transmitter repeatedly applies transmission distortion power control and filtering to eliminate the radiated power beyond the signal band and to reduce peak power. In the receiver 60, reception quality can be improved by eliminating distortion power generated by the repetition processing in the transmitter.

The receiver 60 shown in Fig. 18 includes a guard interval (GI) removing unit 601, a serial-parallel converting (S/P) unit 603, a Fast Fourier Transform (FFT) unit 605, a sub-carrier selecting unit 607, a channel estimating unit 609, a received signal demodulating unit 611, a modulated signal generating unit 613, plural transmission distortion power generating units 615-1 to 615-N, an adding unit 616, an equalizing unit 617, and a received signal re-demodulating unit 619.

The processes performed by the guard interval removing unit 601 through the received signal demodulating unit 611 are the same as those of the receiver 50 shown in Fig. 15, and their discussions are thus omitted.

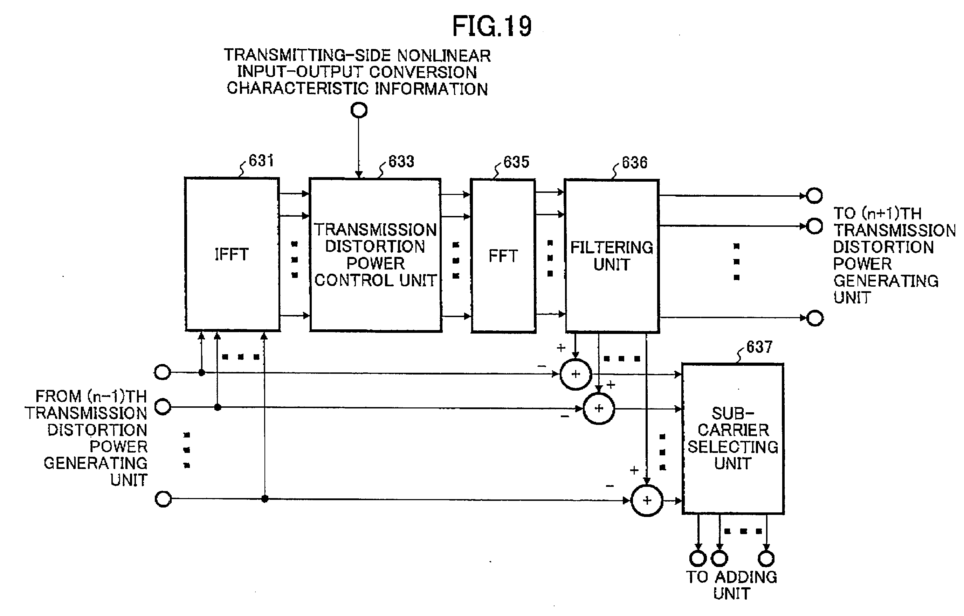

Each of the transmission distortion power generating units 615-1 to 615-N converts the amplitudes of the signals to which the sub-carriers are assigned based on the same nonlinear input-output conversion characteristic as that of the transmitter, and then calculates distortion power when filtering is applied. Fig. 19 shows an example of the transmission distortion power generating unit 615. The transmission distortion power generating unit 615 includes an Inverse Fast Fourier Transform (IFFT) unit 631, a transmission distortion power control unit 633, a Fast Fourier Transform (FFT) unit 635, a filtering unit 636, and a sub-carrier selecting unit 637.

In the same manner as the transmission distortion power generating unit 515 shown in Fig. 17, the Inverse Fast Fourier Transform unit 631 transforms the signals on the frequency axis into the signals on the time axis. The transmission distortion power control unit 633 converts the amplitudes of the signals on the time axis, using the same nonlinear input-output conversion characteristic as that used by the transmitter. The Fast Fourier Transform unit 635 transforms the signals generated by the transmission distortion power control unit 633 into the signals on the frequency axis. Then, the filtering unit 636 filters the signals on the frequency axis using the same filtering characteristic as that used by the transmitter. Distortion power is calculated by the comparison between the signals output from the filtering unit 636 and the original signals on the frequency axis. Specifically, the distortion power is calculated by subtracting the original signals on the frequency axis from the signals output from the filtering unit 636. Then, the sub-carrier selecting unit 637 selects sub-carriers used by the receiver 60.

The adding unit 616 adds the distortion power calculated by the transmission distortion power generating units 615-1 to 615-N. The equalizing unit 617 converts the total distortion power depending on channel fluctuations on the transmission channel. Finally, the calculated total distortion power is subtracted from the received (parallel) signals for the respective sub-carriers selected by the sub-carrier selecting unit 607. Thus, the distortion power is eliminated from the received signal. The received signal re-demodulating unit 619 demodulates the signal from which the distortion power is eliminated for each sub-carrier. In this manner, distortion power generated by the repetition processing in the transmitter can be eliminated by the receiver 60.

In order for the receiver 60 to accurately generate distortion power generated by the transmitter, it is desirable that the number of repetitions in the receiver 60 be the same as that in the transmitter. For example, when filtering is applied once in the transmitter, the number of repetitions in the receiver 60 may be equal to one. When the number of repetitions is controlled in the transmitter 40 shown in Fig. 14, the receiver 60 may receive the number of repetitions from the transmitter together with the nonlinear input-output conversion characteristic used by the transmitter. It should be noted that the number of repetitions in the receiver 60 may be smaller than the number of repetitions in the transmitter in order to reduce the amount of processing in the receiver 60.

<Modification in which transmission distortion power elimination is repeatedly applied>

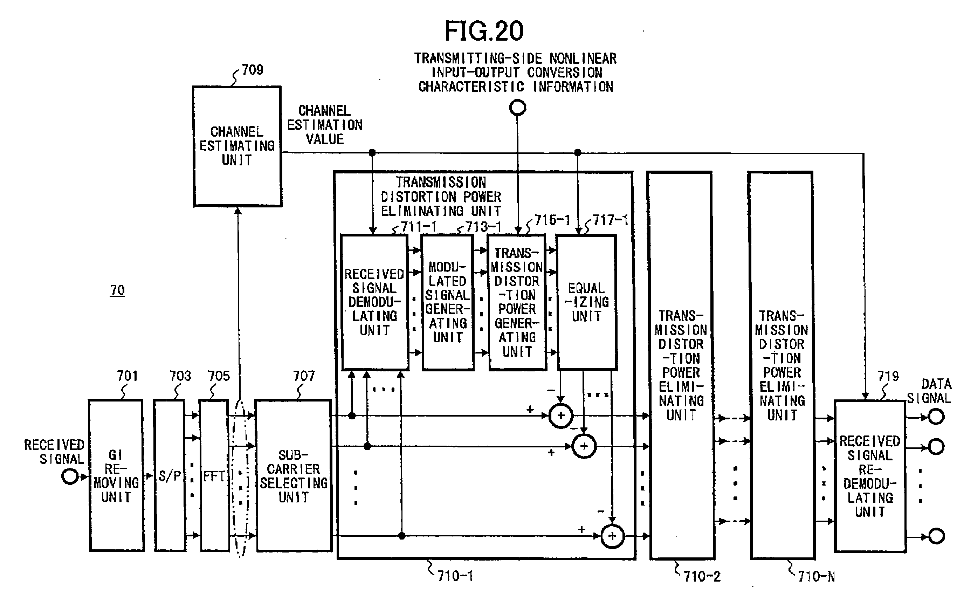

Fig. 20 shows a modification in which transmission distortion power elimination is repeatedly applied. A receiver 70 shown in Fig. 20 includes a guard interval (GI) removing unit 701, a serial-parallel converting (S/P) unit 703, a Fast Fourier Transform (FFT) unit 705, a sub-carrier selecting unit 707, a channel estimating unit 709, plural received signal demodulating units 711-1 to 711-N, plural modulated signal generating units 713-1 to 713-N, plural transmission distortion power generating units 715-1 to 715-N, plural equalizing units 717-1 to 717-N, and a received signal re-demodulating unit 719. In Fig. 20, the received signal demodulating unit 711-1 (711-2 or 711-N), the modulated signal generating unit 713-1 (713-2 or 713-N), the transmission distortion power generating unit 715-1 (715-2 or 715-N), and the equalizing unit 717-1 (717-2 or 717-N) are combined as a transmission distortion power eliminating unit 710-1 (710-2 or 710-N).

The processes performed by the guard interval removing unit 701 through the sub-carrier selecting unit 707 are the same as those of the receiver 50 shown in Fig. 15, and their discussions are thus omitted. In addition, the processes performed by each of the transmission distortion power eliminating units 710-1 to 710-N are the same as those performed by the received signal demodulating unit 511 through the equalizing unit 517. Thus, the receiver 70 repeatedly applies transmission distortion power elimination by eliminating transmission distortion power and then demodulating the signals.

The received signal re-demodulating unit 719 demodulates the signal from which the distortion power is eliminated for each sub-carrier. Reception quality can be improved by eliminating transmission distortion power and then demodulating the signals. Accordingly, reception quality can be further improved by generating transmission distortion power using the demodulated signals.

It should be noted that the transmission distortion power generating units 615-1 to 615-N shown in Fig. 18 may be used in the transmission distortion power eliminating unit 710-1 to 710-N, when the transmitter repeatedly applies transmission distortion power control and filtering.

While the embodiments of the present invention have been described with reference to the transmitters and receivers according to the OFDMA scheme, the present invention is applicable to any frequency sharing system in which a predetermined frequency band is shared by plural users or plural systems.

<Effects of embodiments>

According to an embodiment of the present invention, interference with signals in adjacent bands of a frequency band used for signal transmission can be reduced in a system in which a predetermined frequency band is shared by plural users or plural systems. For example, when adjacent bands of the frequency band used for signal transmission are in use, the nonlinear input-output conversion characteristic control unit 103, 203, 303, or 403 controls the nonlinear input-output conversion characteristic to reduce power spreading beyond the signal band, thereby reducing interference with signals in the adjacent bands.

The nonlinear input-output conversion characteristic control unit 103, 203, 303, or 403 may also consider the amount of interference in adjacent bands of a frequency band used for signal transmission, thereby reducing the influence of distortion power on users who use the adjacent bands.

The nonlinear input-output conversion characteristic control unit 103, 203, 303, or 403 may also consider the usage status of the frequency band by neighbor base stations, thereby reducing the influence of distortion power on users who use the adjacent bands to communicate with the neighbor base stations.

In addition, the nonlinear input-output conversion characteristic control unit 103 may estimate distortion power within the signal band based on the determined nonlinear input-output conversion characteristic, and then the modulated signal generating unit 101 may determine a modulation scheme or a coding scheme based on the estimation result, thereby alleviating degradation of modulation accuracy and reception quality.

By determining the saturated output of the nonlinear input-output conversion characteristic used by the transmission distortion power control unit 105 to be lower than or equal to the saturated output used by the transmission power amplification unit 107, distortion power generated by the transmission power amplification unit 107 can be reduced.

On the other hand, when the usage rate of the system band is low and a band for each user can be sufficiently reserved, the nonlinear input-output conversion characteristic control unit 103, 203, 303, or 403 may control the nonlinear input-output conversion characteristic to reduce distortion power within the signal band, thereby maintaining reception quality in the receiver.

The nonlinear input-output conversion characteristic control unit 103, 203, 303, or 403 may also control the nonlinear input-output conversion characteristic in the frequency band positioned at the end of the system band to reduce power spreading beyond the signal band, thereby reducing interference with other systems.

These effects can be achieved by selecting one of the plural transmission power amplification units 207-1 to 207-N having different nonlinear input-output conversion characteristics. In addition, these effects can be also achieved when the predistortion unit 305 is used.

In addition, the filtering unit 406 may be incorporated into the transmitter 40, thereby reducing radiated power of the output signal from the transmission power amplification unit 407 beyond the signal band.

Furthermore, transmission distortion power control and filtering may be repeatedly applied, thereby reducing radiated power beyond the signal band at the output of the transmission power amplification unit 407 and also reducing peak power. When transmission distortion power control and filtering are repeatedly applied, the repetition processing control unit 409 may control the number of repetitions, thereby reducing peak power caused by filtering.

The receiver 50 may eliminate distortion power generated by the transmitter in which the nonlinear input-output conversion characteristic determined by the nonlinear input-output conversion characteristic control unit 103, 203, 303, or 403 is used, and thereby improve reception quality. When the transmitter uses the nonlinear input-output conversion characteristic expressed as the equation (1), the receiver may only receive the value 'p' to eliminate distortion power.

When the transmitter repeatedly applies transmission distortion power control and filtering, the receiver may eliminate distortion power generated by the repetition processing in the transmitter, and thereby improve reception quality.

In addition, the receiver 70 may repeatedly apply transmission distortion power elimination, and thereby improve reception quality.

The present invention is not limited to the embodiments or modifications as described above. Rather, the present invention includes various alterations, modifications, and substitutions without departing from the scope of the present invention as set forth in the Claims. In addition, the embodiments and modifications as described above may be appropriately combined.

[Description of Notations]

| 10 | transmitter |
|---|---|
| 101 | modulated signal generating unit |
| 103 | nonlinear input-output conversion characteristic control unit |
| 105 | transmission distortion power control unit |
| 107 | transmission power amplification unit |
| 20 | transmitter |
| 201 | modulated signal generating unit |
| 203 | nonlinear input-output conversion characteristic control unit |
| 205 | selecting unit |
| 207 | transmission power amplification unit |
| 30 | transmitter |
| 301 | modulated signal generating unit |
| 303 | nonlinear input-output conversion characteristic control unit |
| 305 | predistortion unit |
| 307 | transmission power amplification unit |
| 40 | transmitter |
| 401 | modulated signal generating unit |
| 403 | nonlinear input-output conversion characteristic |

control unit
405 transmission distortion power control unit
406 filtering unit
407 transmission power amplification unit
409 repetition processing control unit
50 receiver
501 guard interval removing unit
503 serial-parallel converting unit
505 Fast Fourier Transform unit
507 sub-carrier selecting unit
509 channel estimating unit
511 received signal demodulating unit
513 modulated signal generating unit
515 transmission distortion power generating unit
517 equalizing unit
519 received signal re-demodulating unit
60 receiver
601 guard interval removing unit
603 serial-parallel converting unit
605 Fast Fourier Transform unit
607 sub-carrier selecting unit
609 channel estimating unit
611 received signal demodulating unit
613 modulated signal generating unit
615 transmission distortion power generating unit
616 adding unit
617 equalizing unit
619 received signal re-demodulating unit
70 receiver
701 guard interval removing unit
703 serial-parallel converting unit
705 Fast Fourier Transform unit
707 sub-carrier selecting unit
709 channel estimating unit
710 transmission distortion power eliminating unit
711 received signal demodulating unit
713 modulated signal generating unit
715 transmission distortion power generating unit
717 equalizing unit
719 received signal re-demodulating unit

**Claims**

1.  A transmitter (10) comprising:

    a nonlinear input-output conversion characteristic control unit (103) configured to determine a nonlinear input-output conversion characteristic for converting a signal to be a smoother conversion characteristic close to a saturated output with a decrease
    of unused adjacent bands, the nonlinear input-output conversion characteristic representing a relationship between an input amplitude value of the signal and an output amplitude value of the signal as a nonlinear function;
    an amplitude control unit (105) configured to
    convert an amplitude of the signal based on the determined nonlinear input-output conversion characteristic; and
    a transmission power amplification unit (107) configured to amplify power of the signal with the converted amplitude.

2.  The transmitter as claimed in Claim 1, wherein:

    the nonlinear input-output conversion characteristic control unit (103) is configured to determine the nonlinear input-output conversion characteristic to be the smooth conversion characteristic close to the saturated output, when the amount of interference in the adjacent band of the frequency band to be used for signal transmission is greater than a predetermined threshold.

3.  The transmitter as claimed in Claim 1, wherein:

    the nonlinear input-output conversion characteristic control unit (103) is configured to determine the nonlinear input-output conversion characteristic to be a smooth conversion characteristic close to a saturated output, when an adjacent band of the frequency band to be used for signal transmission is positioned at an end of a system band.

4.  The transmitter as claimed in Claim 1, wherein:

    the nonlinear input-output conversion characteristic unit (103) is configured to determine the nonlinear input-output conversion characteristic expressed as:

$$A_{out} = \frac{A_{in}}{\left[1+\left(\dfrac{A_{in}}{A_0}\right)^{2p}\right]^{\frac{1}{2p}}}$$

5.  The transmitter as claimed in Claim 1, wherein:

    the amplitude control unit (105) is configured to compensate for nonlinear distortion according to predistortion, such that an output signal corresponding to the determined nonlinear input-output conversion characteristic is obtained from the transmission power amplification unit.

6.  The transmitter as claimed in Claim 1, further comprising:

    a filtering unit (406) configured to limit a band of the signal with the converted amplitude.

7. A system comprising a transmitter (10) according to any preceding claim and a receiver (50), wherein:

the receiver comprises

a nonlinear input-output conversion characteristic receiving unit configured to receive the nonlinear input-output conversion characteristic;

a received signal demodulating unit (511) configured to demodulate a received signal;

a modulated signal generating unit (513) configured to modulate the demodulated signal;

a transmission distortion power generating unit (515) configured to convert an amplitude of the modulated signal based on the received nonlinear input-output conversion characteristic to generate distortion power;

a subtracting unit configured to subtract the generated distortion power from the received signal; and

a received signal re-demodulating unit (519) configured to re-demodulate the received signal from which the distortion power is subtracted.

8. The system as claimed in Claim 7, wherein:

the transmission distortion power generating unit (515) is configured to limit a band of the signal with the converted amplitude to generate the distortion power.

9. The system as claimed in Claim 8, wherein:

the transmission distortion power generating unit (515) is configured to repeat generating the distortion power, and

the subtracting unit is configured to subtract the repeatedly-generated distortion power from the received signal.

10. The system as claimed in Claim 7; wherein:

the transmission distortion power generating unit (515) and the subtracting unit are configured to repeat generating the distortion power and subtracting the generated distortion power from the received power, respectively.

11. A power amplification method in a transmitter, comprising the steps of:

determining a nonlinear input-output conversion characteristic for converting a signal to be a smoother conversion characteristic close to a saturated output with a decrease of unused adjacent bands, the nonlinear input-output conversion characteristic representing a relationship between an input amplitude value of the signal and an output amplitude value of the signal as a nonlinear function;

converting an amplitude of the signal based on the determined nonlinear input-output conversion characteristic; and

amplifying power of the signal with the converted amplitude.

12. A power amplification and signal demodulation method in a system comprising a transmitter and a receiver, comprising the steps of:

at the transmitter:

determining a nonlinear input-output conversion characteristic for converting a signal to be a smoother conversion characteristic close to a saturated output with a decrease in unused adjacent bands, the nonlinear input-output conversion characteristic representing a relationship between an input amplitude value of the signal and an output amplitude value of the signal as a nonlinear function;

converting an amplitude of the signal based on the determined nonlinear input-output conversion characteristic; and

amplifying power of the signal with the converted amplitude; and

at the receiver:

receiving the nonlinear input-output conversion characteristic;

demodulating a received signal;

subtracting the generated distortion power from the received signal; and

re-demodulating the received signal from which the distortion power is subtracted.

**Patentansprüche**

1. Sender (10), Folgendes umfassend:

eine Steuereinheit für eine nichtlineare Eingang-Ausgang-Umwandlungscharakteristik (103), konfiguriert zum Bestimmen einer nichtlinearen Eingang-Ausgang-Umwandlungscharakteristik zum Umwandeln eines Signals, damit es eine glattere Umwandlungscharakteristik in der Nähe eines gesättigten Ausgangs mit einer Reduktion von nichtgenutzten benachbarten Bändern ist, wobei die nichtlineare Eingang-Ausgang-Umwandlungscharakteristik eine Relation zwischen einem Eingangsamplitudenwert des Signals und einem Ausgangsamplitudenwert des Signals als eine nichtlineare Funktion repräsentiert;

eine Amplitudensteuereinheit (105), konfiguriert zum Umwandeln einer Amplitude des Signals auf der Basis der bestimmten nichtlinearen Eingang-Ausgang-Umwandlungscharakteristik; und

eine Übertragungsleistungs-Verstärkungseinheit (107), konfiguriert zum Verstärken von Leistung des Signals mit der umgewandelten Amplitude.

2. Sender nach Anspruch 1, worin:

die Steuereinheit für eine nichtlineare Eingang-Ausgang-Umwandlungscharakteristik (103) zum Bestimmen konfiguriert ist, damit die nichtlineare Eingang-Ausgang-Umwandlungscharakteristik die glatte Umwandlungscharakteristik in der Nähe des gesättigten Ausgangs ist, wenn die Menge von Störung im benachbarten Band des Frequenzbandes, das für Signalübertragung verwendet werden soll, größer ist als eine vorgegebene Schwelle.

3. Sender nach Anspruch 1, worin:

die Steuereinheit für eine nichtlineare Eingang-Ausgang-Umwandlungscharakteristik (103) zum Bestimmen konfiguriert ist, damit die nichtlineare Eingang-Ausgang-Umwandlungscharakteristik eine glatte Umwandlungscharakteristik in der Nähe eines gesättigten Ausgangs ist, wenn ein benachbartes Band des Frequenzbandes, das für Signalübertragung verwendet werden soll, an einem Ende eines Systembands positioniert ist.

4. Sender nach Anspruch 1, worin:

die Steuereinheit für eine nichtlineare Eingang-Ausgang-Umwandlungscharakteristik (103) zum Bestimmen konfiguriert ist, dass die nichtlineare Eingang-Ausgang-Umwandlungscharakteristik wie folgt ausgedrückt wird:

$$A_{out} = \frac{A_{in}}{\left[1+\left(\frac{A_{in}}{A_0}\right)^{2p}\right]^{\frac{1}{2p}}}$$

5. Sender nach Anspruch 1, worin:

die Amplitudensteuereinheit (105) zum Kompensieren für nichtlineare Verzerrung gemäß Vorverzerrung konfiguriert ist, sodass ein Ausgangssignal, das der bestimmten nichtlinearen Eingang-Ausgang-Umwandlungscharakteristik entspricht, von der Übertragungsleistungs-Verstärkungseinheit erhalten wird.

6. Sender nach Anspruch 1, außerdem umfassend:

eine Filterungseinheit (406), konfiguriert zum Begrenzen eines Bandes des Signals mit der umgewandelten Amplitude.

7. System, einen Sender (10) nach einem vorhergehenden Anspruch umfassend und einen Empfänger (50), worin:

der Empfänger Folgendes umfasst:

eine Steuereinheit für eine nichtlineare Eingang-Ausgang-Umwandlungscharakteristik, konfiguriert zum Empfangen der nichtlinearen Eingang-Ausgang-Umwandlungscharakteristik;
eine Empfangssignal-Demodulationseinheit (511), konfiguriert zum Demodulieren eines empfangenen Signals;
eine Modulationssignal-Erzeugungseinheit (513), konfiguriert zum Modulieren des demodulierten Signals;
eine Übertragungsverzerrungsleistungs-Erzeugungseinheit (515), konfiguriert zum Umwandeln einer Amplitude des modulierten Signals auf der Basis der empfangenen nichtlinearen Eingang-Ausgang-Umwandlungscharakteristik, um Verzerrungsleistung zu erzeugen;
eine Subtraktionseinheit, konfiguriert zum Subtrahieren der erzeugten Verzerrungsleistung vom empfangenen Signal; und
eine Empfangssignal-Redemodulationseinheit (519), konfiguriert zum Redemodulieren des empfangenen Signals, von dem die Verzerrungsleistung subtrahiert wird.

8. System nach Anspruch 7, worin:

die Übertragungsverzerrungsleistungs-Erzeugungseinheit (515) dazu konfiguriert ist, ein Band des Signals mit der umgewandelten Amplitude zu begrenzen, um die Verzerrungsleistung zu erzeugen.

9. System nach Anspruch 8, worin:

die Übertragungsverzerrungsleistungs-Erzeugungseinheit (515) dazu konfiguriert ist, das Erzeugen der Verzerrungsleistung zu wiederholen, und
die Subtraktionseinheit dazu konfiguriert ist, die wiederholt erzeugte Verzerrungsleistung vom empfangenen Signal zu subtrahieren.

**10.** System nach Anspruch 7, worin:

die Übertragungsverzerrungsleistungs-Erzeugungseinheit (515) und die Subtraktionseinheit dazu konfiguriert sind, das Erzeugen der Verzerrungsleistung bzw. das Subtrahieren der erzeugten Verzerrungsleistung von der empfangenen Leistung zu wiederholen.

**11.** Leistungsverstärkungsverfahren in einem Sender, die folgenden Schritte umfassend:

Bestimmen einer nichtlinearen Eingang-Ausgang-Umwandlungscharakteristik zum Umwandeln eines Signals, damit es eine glattere Umwandlungscharakteristik in der Nähe eines gesättigten Ausgangs mit einer Reduktion von nichtgenutzten benachbarten Bändern ist, wobei die nichtlineare Eingang-Ausgang-Umwandlungscharakteristik eine Relation zwischen einem Eingangsamplitudenwert des Signals und einem Ausgangsamplitudenwert des Signals als eine nichtlineare Funktion repräsentiert;
Umwandeln einer Amplitude des Signals auf der Basis der bestimmten nichtlinearen Eingang-Ausgang-Umwandlungscharakteristik; und
Verstärken von Leistung des Signals mit der umgewandelten Amplitude.

**12.** Leistungsverstärkungs- und Signaldemodulationsverfahren in einem System, das einen Sender und einen Empfänger umfasst, die folgenden Schritte umfassend:

am Sender:

Bestimmen einer nichtlinearen Eingang-Ausgang-Umwandlungscharakteristik zum Umwandeln eines Signals, damit es eine glattere Umwandlungscharakteristik in der Nähe eines gesättigten Ausgangs mit einer Reduktion von nichtgenutzten benachbarten Bändern ist, wobei die nichtlineare Eingang-Ausgang-Umwandlungscharakteristik eine Relation zwischen einem Eingangsamplitudenwert des Signals und einem Ausgangsamplitudenwert des Signals als eine nichtlineare Funktion repräsentiert;
Umwandeln einer Amplitude des Signals auf der Basis der bestimmten nichtlinearen Eingang-Ausgang-Umwandlungscharakteristik; und
Verstärken von Leistung des Signals mit der umgewandelten Amplitude; und

am Empfänger:

Empfangen der nichtlinearen Eingang-Ausgang-Umwandlungscharakteristik;
Demodulieren eines empfangenen Signals;
Subtrahieren der erzeugten Verzerrungsleistung vom empfangenen Signal; und
Redemodulieren des empfangenen Signals, von dem die Verzerrungsleistung subtrahiert wird.

**Revendications**

**1.** Émetteur (10) comprenant :

une unité de commande de caractéristique de conversion d'entrées-sorties non linéaire (103) configurée de manière à déterminer une caractéristique de conversion d'entrées-sorties non linéaire, pour convertir un signal, comme étant une caractéristique de conversion plus lisse proche d'une sortie saturée avec une diminution de bandes adjacentes inutilisées, la caractéristique de conversion d'entrées-sorties non linéaire représentant une relation entre une valeur d'amplitude d'entrée du signal et une valeur d'amplitude de sortie du signal, sous la forme d'une fonction non linéaire ;
une unité de commande d'amplitude (105) configurée de manière à convertir une amplitude du signal sur la base de la caractéristique de conversion d'entrées-sorties non linéaire déterminée ; et
une unité d'amplification de puissance de transmission (107) configurée de manière à amplifier la puissance du signal avec l'amplitude convertie.

**2.** Émetteur selon la revendication 1, dans lequel :

l'unité de commande de caractéristique de conversion d'entrées-sorties non linéaire (103) est configurée de manière à déterminer la caractéristique de conversion d'entrées-sorties non linéaire comme étant la caractéristique de conversion lisse proche de la sortie saturée, lorsque la quantité de brouillage dans la bande adjacente de la bande de fréquence à utiliser pour la transmission de signal est supérieure à un seuil prédéterminé.

**3.** Émetteur selon la revendication 1, dans lequel :

l'unité de commande de caractéristique de conversion d'entrées-sorties non linéaire (103) est configurée de manière à déterminer la caractéristique de conversion d'entrées-sorties non linéaire comme étant une caractéristique de conversion lisse proche d'une sortie saturée, lorsqu'une bande adjacente de la bande de fréquence à utiliser pour la transmission de signal est positionnée à une extrémité d'une bande de système.

4. Émetteur selon la revendication 1, dans lequel :

l'unité de commande de caractéristique de conversion d'entrées-sorties non linéaire (103) est configurée de manière à déterminer la caractéristique de conversion d'entrées-sorties non linéaire exprimée comme suit :

$$A_{out} = \frac{A_{in}}{\left[1 + \left(\frac{A_{in}}{A_0}\right)^{2p}\right]^{\frac{1}{2p}}}$$

5. Émetteur selon la revendication 1, dans lequel :

l'unité de commande d'amplitude (105) est configurée de manière à compenser une distorsion non linéaire selon une prédistorsion, de sorte qu'un signal de sortie correspondant à la caractéristique de conversion d'entrées-sorties non linéaire déterminée est obtenu à partir de l'unité d'amplification de puissance de transmission.

6. Émetteur selon la revendication 1, comprenant en outre :

une unité de filtrage (406) configurée de manière à limiter une bande du signal avec l'amplitude convertie.

7. Système comprenant un émetteur (10) selon l'une quelconque des revendications précédentes, et un récepteur (50), dans lequel :

le récepteur comprend :

une unité de réception de caractéristique de conversion d'entrées-sorties non linéaire configurée de manière à recevoir la caractéristique de conversion d'entrées-sorties non linéaire ;
une unité de démodulation de signal reçu (511) configurée de manière à démoduler un signal reçu ;
une unité de génération de signal modulé (513) configurée de manière à moduler le signal démodulé ;
une unité de génération de puissance de distorsion de transmission (515) configurée de manière à convertir une amplitude du signal modulé sur la base de la caractéristique de conversion d'entrées-sorties non linéaire reçue en vue de générer une puissance de distorsion ;
une unité de soustraction configurée de manière à soustraire la puissance de distorsion générée du signal reçu ; et
une unité de re-démodulation de signal reçu (519) configurée de manière à démoduler à nouveau le signal reçu duquel est soustraite la puissance de distorsion.

8. Système selon la revendication 7, dans lequel :

l'unité de génération de puissance de distorsion de transmission (515) est configurée de manière à limiter une bande du signal avec l'amplitude convertie en vue de générer la puissance de distorsion.

9. Système selon la revendication 8, dans lequel :

l'unité de génération de puissance de distorsion de transmission (515) est configurée de manière à répéter la génération de la puissance de distorsion ; et
l'unité de soustraction est configurée de manière à soustraire la puissance de distorsion générée de manière répétée du signal reçu.

10. Système selon la revendication 7, dans lequel :

l'unité de génération de puissance de distorsion de transmission (515) et l'unité de soustraction sont configurées de manière à répéter la génération de la puissance de distorsion et la soustraction de la puissance de distorsion générée de la puissance reçue, respectivement.

11. Procédé d'amplification de puissance dans un émetteur, comprenant les étapes ci-dessous consistant à :

déterminer une caractéristique de conversion d'entrées-sorties non linéaire, pour convertir un signal, comme étant une caractéristique de conversion plus lisse proche d'une sortie saturée avec une diminution de bandes adjacentes inutilisées, la caractéristique de conversion d'entrées-sorties non linéaire représentant une relation entre une valeur d'amplitude d'entrée du signal et une valeur d'amplitude de sortie du signal, sous la forme d'une fonction non linéaire ;
convertir une amplitude du signal sur la base de la caractéristique de conversion d'entrées-sorties non linéaire déterminée ; et
amplifier la puissance du signal avec l'amplitude convertie.

**12.** Procédé de démodulation de signal et d'amplification de puissance dans un système comprenant un émetteur et un récepteur, comprenant les étapes ci-dessous consistant à :

au niveau de l'émetteur :

déterminer une caractéristique de conversion d'entrées-sorties non linéaire, pour convertir un signal, comme étant une caractéristique de conversion plus lisse proche d'une sortie saturée avec une diminution de bandes adjacentes inutilisées, la caractéristique de conversion d'entrées-sorties non linéaire représentant une relation entre une valeur d'amplitude d'entrée du signal et une valeur d'amplitude de sortie du signal, sous la forme d'une fonction non linéaire ;
convertir une amplitude du signal sur la base de la caractéristique de conversion d'entrées-sorties non linéaire déterminée ; et
amplifier la puissance du signal avec l'amplitude convertie ; et

au niveau du récepteur :

recevoir la caractéristique de conversion d'entrées-sorties non linéaire ;
démoduler un signal reçu ;
soustraire la puissance de distorsion générée du signal reçu ; et
démoduler à nouveau le signal reçu duquel est soustraite la puissance de distorsion.

# FIG.1

# FIG.2

SIGNAL SPECTRUM
FOR USER 1

USER 2

USER 1

DISTORTION POWER
SPECTRUM FOR USER 1

FREQUENCY

SIGNAL BAND FOR USER 1

# FIG.3

USAGE STATUS OF FREQUENCY BAND ○ →

103
NONLINEAR INPUT-OUTPUT CONVERSION CHARACTERISTIC CONTROL UNIT

10

101
MODULATED SIGNAL GENERATING UNIT

DATA SIGNAL ○ →

105
TRANSMISSION DISTORTION POWER CONTROL UNIT

107
TRANSMISSION POWER AMPLIFICATION UNIT

○ TRANSMISSION SIGNAL

EP 2 226 981 B1

FIG.4

EP 2 226 981 B1

# FIG.5

# FIG.6

SIGNAL SPECTRUM

DISTORTION POWER (WHEN 'p' IS SMALL)

DISTORTION POWER (WHEN 'p' is LARGE)

CLIPPING

FREQUENCY

EP 2 226 981 B1

# FIG.7A

SYSTEM BAND

| USER 1 | USER 2 | USER 3 | | USER 4 |

FREQUENCY

# FIG.7B

EP 2 226 981 B1

# FIG.7C

SYSTEM BAND

DISTORTION
POWER OF
USER 1

USER
1

FREQUENCY
BAND USED
BY USERS
TO COMMU-
NICATE
WITH
OTHER
BASE
STATIONS

USER
2

USER
3

USER
4

FREQUENCY

EP 2 226 981 B1

# FIG.7D

SHARED FREQUENCY BAND

DISTORTION POWER OF USER 1

USER 1

USER 2

USER IN NON-PRI-ORITY SYSTEM

DISTORTION POWER IN NON-PRIORITY SYSTEM

USER 3

FREQUENCY

EP 2 226 981 B1

# FIG.7E

SYSTEM BAND 1  SYSTEM BAND 2  SYSTEM BAND 3

FRE-QUENCY BAND 1

FRE-QUENCY BAND 2

FREQUENCY

EP 2 226 981 B1

# FIG.8

USAGE STATUS OF FREQUENCY BAND ◯ ——▶ NONLINEAR INPUT-OUTPUT CONVERSION CHARACTERISTIC CONTROL UNIT `103`

10

DATA SIGNAL ◯ ——▶ MODULATED SIGNAL GENERATING UNIT `101` ——▶ TRANSMISSION DISTORTION POWER CONTROL UNIT `105` ——▶ TRANSMISSION POWER AMPLIFICATION UNIT `107` ——▶ ◯ TRANSMISSION SIGNAL

EP 2 226 981 B1

# FIG.9

EP 2 226 981 B1

# FIG.10

USAGE STATUS OF FREQUENCY BAND ○ → NONLINEAR INPUT-OUTPUT CONVERSION CHARACTERISTIC CONTROL UNIT ⌐303

30

DATA SIGNAL ○ → MODULATED SIGNAL GENERATING UNIT ⌐301 → PREDISTORTION UNIT ⌐305 → TRANSMISSION POWER AMPLIFICATION UNIT ⌐307 → ○ TRANSMISSION SIGNAL

EP 2 226 981 B1

# FIG.11

OUTPUT

LINEAR
INPUT-OUTPUT
CONVERSION
CHARACTERISTIC

NONLINEAR
INPUT-OUTPUT
CONVERSION
CHARACTERISTIC
OR PREDISTORTION

NONLINEAR INPUT-OUTPUT
CONVERSION CHARACTERISTIC
OF TRANSMISSION POWER AMPLIFIER

0

INPUT

**FIG.12**

# FIG.13

USAGE STATUS OF FREQUENCY BAND → NONLINEAR INPUT-OUTPUT CONVERSION CHARACTERISTIC CONTROL UNIT (403)

40

DATA SIGNAL → MODULATED SIGNAL GENERATING UNIT (401) → TRANSMISSION DISTORTION POWER CONTROL UNIT (405-1) → FILTERING UNIT (406-1) → TRANSMISSION DISTORTION POWER CONTROL AND FILTERING UNIT (405-2・406-2) → ⋯ → TRANSMISSION DISTORTION POWER CONTROL AND FILTERING UNIT (405-N・406-N) → TRANSMISSION POWER AMPLIFICATION UNIT (407) → TRANSMISSION SIGNAL

EP 2 226 981 B1

# FIG.14

USAGE
STATUS OF
FREQUENCY
BAND

403 — NONLINEAR INPUT—OUTPUT CONVERSION CHARACTERISTIC CONTROL UNIT

40

409 — REPETITION PROCESSING CONTROL SIGNAL

DISTORTION POWER ESTIMATION SIGNAL

REPETITION PROCESSING CONTROL SIGNAL

DATA SIGNAL

401 — MODULATED SIGNAL GENERATING UNIT

405-1 — TRANSMISSION DISTORTION POWER CONTROL UNIT

406-1 — FILTERING UNIT

405-2 · 406-2 — TRANSMISSION DISTORTION POWER CONTROL AND FILTERING UNIT

405-N · 406-N — TRANSMISSION DISTORTION POWER CONTROL AND FILTERING UNIT

407 — TRANSMISSION POWER AMPLIFICATION UNIT

TRANSMISSION SIGNAL

EP 2 226 981 B1

# FIG.15

EP 2 226 981 B1

# FIG.16

521
523
525

SYMBOL MAPPING UNIT

CODING UNIT

SUB-CARRIER ASSIGNING UNIT

TRANSMITTING-SIDE NONLINEAR
INPUT-OUTPUT CONVERSION
CHARACTERISTIC INFORMATION

FIG.17

531

IFFT

533

TRANSMISSION
DISTORTION
POWER
CONTROL UNIT

535

FFT

537

SUB-
CARRIER
SELECTING
UNIT

FIG.18

# FIG.19

TRANSMITTING-SIDE NONLINEAR
INPUT-OUTPUT CONVERSION
CHARACTERISTIC INFORMATION

TO (n+1)TH
TRANSMISSION
DISTORTION
POWER
GENERATING
UNIT

FROM (n−1)TH
TRANSMISSION
DISTORTION
POWER
GENERATING
UNIT

TO ADDING
UNIT

EP 2 226 981 B1

# FIG.20

TRANSMITTING-SIDE NONLINEAR
INPUT-OUTPUT CONVERSION
CHARACTERISTIC INFORMATION

EP 2 226 981 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008060846 A
- US 2005201180 A1, NAGUIB AYMAN F
- US 20050915 A1
- US 2002101936 A1, (WRIGHT ANDREW S
- WO 2004073182 A2

### Non-patent literature cited in the description

- Pulse superposition: a technique for peak-to-average power ratio reduction in OFDM modulation. **FARNESE et al.** PROCEEDINGS OF IEEE INTERNATIONAL CONFERENCE ON COMMUNIATIONS. IEEE, 28 April 2002, vol. 3, 1682-1685